# EUROPEAN PATENT APPLICATION

(11) **EP 2 022 569 A1**
(43) Date of publication of application: **11.02.2009**
(21) Application number: 07742731.8
(22) Date of filing: 01.05.2007
(51) Int. Cl.: B05C 5/00, B05C 11/10

(54) **DROPLET APPLYING APPARATUS**

(30) Priority: 08.05.2006 JP 2006129229
(71) Applicant: Sharp Kabushiki Kaisha, Osaka-shi, Osaka 545-8522 (JP)
(72) Inventor: NAKA, Masamichi, Kyoto-fu (JP); IWATA, Mitsuhiro, Nara-ken (JP); TAMURA, Toshihiro, Nara-ken (JP)
(74) Representative: Brown, Kenneth Richard
(86) International application number: PCT/JP2007/059296
(87) International publication number: WO 2007/129634

(57) **Abstract**

The droplet applying apparatus includes a base 11 having a mounting surface 11a on which a substrate 10 is to be mounted, beam members 41, 42 which are fitted to the base 11 so as to be movable relative to the base 11 in an arrow A direction, a plurality of droplet ejecting sections 6 which are fitted to the beam members 41, 42 so as to be movable in an arrow B direction and which eject droplets to the substrate 10, and a control section 13 for controlling movement or stop of the plurality of droplet ejecting sections 6. The control section 13, during ejection operation of one of the droplet ejecting sections 6, performs such control as to effectuate gentle acceleration changes in speed changes of the other droplet moving ejecting section proximate to the one droplet ejecting section 6 while the movable other droplet ejecting section.

## Description

### TECHNICAL FIELD

The present invention relates to a droplet applying apparatus for applying droplets onto a substrate by an ink jet system or the like.

### BACKGROUND ART

In recent years, the ink jet technology has been expected for use as manufacturing apparatuses, not merely as printer devices for forming images on paper mediums. For example, in JP 2003-191462, an apparatus construction in which droplet ejecting elements using the ink jet system are mounted is disclosed as a manufacturing apparatus for liquid crystal displays, organic EL displays, plasma displays, electron emission elements, electrophoretic display devices and the like. For improvement of landing position precision onto the substrate, in JP 2003-191462 A, with the apparatus base body provided by a granite surface plate, a stage for carrying the substrate in one fixed direction and a carriage mechanism for moving an ink jet head along a direction perpendicular to the stage traveling direction are provided on the granite surface plate in direct connection.

A general-use printer by the ink jet system, typically, forms images by using one ink jet head unit on which several pieces of ink jet head elements each having a width of 1/2 to 2 inches and having nozzle openings regularly arrayed at intervals of 150 to 300 nozzles/inch are mounted as elements for ejecting droplets in some plural quantity for each of the individual colors. As the method therefor, it has been practiced that recording sheet, while fed by a sheet feed roller, is scanned a plurality of times in a direction perpendicular to the carrying direction of the recording sheet so that an image is formed on the recording sheet.

Even with the use of the ink jet system as a manufacturing apparatus, the ink jet head elements are similar to those of general-use printers, the size of each ink jet head element in the nozzle array direction being 1 to 2 inches at most as it stands.

Meanwhile, manufacturing processes for liquid crystal displays, organic EL displays, plasma displays, electron emission elements and electrophoretic display devices are increasingly directed toward increasing the yield quantity by using larger-area substrates to reduce the cost and the cycle time. Manufacturing of these devices and others by the ink jet system, it has been considered, would require an apparatus that is capable of managing large-area substrates having one side as much as several meters.

One of manufacturing apparatuses using the ink jet system capable of high-speed processing with large-area substrates is the line head system in which a plurality of ink jet head elements are arrayed to a length more than the substrate size. This system is so configured that at most 1 to 2-inch wide ink jet elements are staggered to an extent equal to the substrate size, in which case at least 100 to 200 heads need to be arrayed on condition that the substrate is several-meter sized. Apparatuses by this system can be said to be quite effective in cases where ejection to all over the substrate such as color filter substrates is required and moreover the ejection points are regularly located.

However, the line head system would be unsuitable for recovery of color filter substrates as shown in, for example, JP 2003-66218 A. JP 2003-66218 A shows a system which includes, as part of the manufacturing method of color filter substrates, ejecting a color filter material only to failure points on occurrence of coloring failure portions in the color filter substrate. Using the line head system as a means for correcting such failure points scattered on the color filter substrate would involve the same processing time as in the ejection of droplets to all over the substrate, and moreover cause most of the nozzles to be non-operating nozzles that perform almost no ejecting operation, leading to a high likelihood of occurrence of nozzle clogging. Further, maintenance operation would be required for all the nozzles, leading to increases in unnecessary waste fluids. Also, with a desire for uniformized ejection quantity, the line head system would give rise to a need for performing ejection quantity correction on a total of thousands of nozzles, one by one, despite the purpose of merely ejecting droplets to scattered desired points, hence extremely inefficient.

Further, in a system in which the ink jet head unit that has been widely used in general-use printers is reciprocated in plurality on one identical plane, the scanning distance of the ink jet head units is increased, and the scanning speed is also limitative in terms of stable operation, so that the processing time could not be shortened.

Furthermore, the desire for efficiently ejecting droplets to desired points without limitation to all over large-area substrates is what will be sought in the future not only for recovery of color filters but in various manufacturing fields.

### DISCLOSURE OF THE INVENTION

Accordingly, an object of the present invention is to provide a droplet applying apparatus which is capable of efficiently applying droplets to specified portions (e.g., coloring failure portions) of the substrate and moreover improving landing position precision of the droplets to the substrate.

In order to achieve the above object, there is provided a droplet applying apparatus comprising:
a base having a mounting surface on which a substrate is to be mounted;
at least one beam member which confronts the mounting surface and extends in one direction of the mounting surface and which is fitted to the base so as to be movable relative to the base in another direction of the mounting surface;
a plurality of droplet ejecting sections which are fitted to the beam member so that at least one of the droplet ejecting sections is movable and which eject and apply droplets to the substrate; and
a control section for, during ejection operation of one of the droplet ejecting sections, performing such control as to effectuate gentle acceleration changes in speed changes of at least ones of the movable other droplet ejecting sections proximate to the one droplet ejecting section while the movable other droplet ejecting sections are being moved.

According to the droplet applying apparatus of this invention, since the droplet applying apparatus includes the at least one beam member that is movable relative to the base and the plurality of droplet ejecting sections that are fitted to the beam member so that at least one of the droplet ejecting sections is movable, it becomes possible, in the application of droplets to specified portions (e.g., coloring failure portions) of the substrate by the droplet ejecting sections, to execute the droplet ejection by moving the beam member or the droplet ejecting sections, so that the droplets can be applied to the specified portions of the substrate with high efficiency.

Also, the quantity of the droplet ejecting sections can be reduced to a necessary minimum, so that the quantity of non-operating droplet ejecting sections can be cut down. Accordingly, clogging of the droplet ejecting sections by droplets can be prevented, the liquid quantity of waste fluid due to the maintenance operation of the droplet ejecting sections can be reduced, and moreover the ejection quantity of all the droplet ejecting sections can be uniformized.

Further, the droplet applying apparatus includes the control section for, during ejection operation of one of the droplet ejecting sections, performing such control as to effectuate gentle acceleration changes in speed changes of the movable other droplet ejecting sections while the other droplet ejecting sections are being moved. Therefore, even if the other droplet ejecting sections are moved during the ejection operation of the one droplet ejecting section, the acceleration changes in speed changes of the other droplet ejecting sections can be made gentle, so that landing position precision of droplets ejected from the one droplet ejecting section is not deteriorated. Also, since the ejection of droplets from the one droplet ejecting section and the movement of the other droplet ejecting sections do not affect each other, the ejection of droplets from the one droplet ejecting section and the movement of the other droplet ejecting sections can be carried out simultaneously, so that the time required for application for the restoration of the substrate or the like can be shortened.

In one embodiment of the invention, the plurality of droplet ejecting sections are fitted to the beam member so as to be movable independently, and
the droplet applying apparatus further includes slide mechanisms which are provided in correspondence to the plurality of droplet ejecting sections, respectively, and to which the droplet ejecting sections are fitted so as to be movable relative to the beam member.

According to the embodiment, the droplet applying apparatus further includes slide mechanisms which are provided in correspondence to the plurality of droplet ejecting sections, respectively, and to which the droplet ejecting sections are fitted so as to be movable relative to the beam member. Accordingly, there is no possibility of interference among the movable droplet ejecting sections, so that the control section can easily control the droplet ejecting sections.

In one embodiment of the invention, the slide mechanisms are air-slide type slide mechanisms.

It is noted here that the air-slide type slide mechanism is so formed that part of the slide mechanism fitted to the beam member and part of the slide mechanism fitted to the droplet ejecting section are relatively slid while kept out of contact.

According to the embodiment, since the slide mechanisms are air-slide type slide mechanisms, movement of the plurality of droplet ejecting sections can be smoothly performed by the slide mechanisms. Thus, acceleration changes in speed changes of the other droplet ejecting sections can be made gentle by the control section with reliability.

In one embodiment of the invention, a distance between the slide mechanism to which the one droplet ejecting section is fitted and the other droplet ejecting sections is not more than 2 m.

According to the embodiment, the distance between the slide mechanism to which the one droplet ejecting section is fitted and the other droplet ejecting sections is not more than 2 m, particularly desirably not more than 0.6 m. Therefore, it becomes possible to, during the ejection operation of the one droplet ejecting section, perform the movement of the other droplet ejecting sections located within a range of 2 m or less, particularly desirably 0.6 m or less, without deteriorating the landing position precision of droplet from the one droplet ejecting section.

Meanwhile, during the ejection operation of the one droplet ejecting section, acceleration changes in speed changes of other droplet ejecting sections located 2 m, particularly desirably 0.6 m or more, far from the one droplet ejecting section can be made sharp. Thus, the other droplet ejecting sections can be moved at further higher speed, so that the time required for application for the restoration of the substrate or the like can be shortened.

In one embodiment of the invention, a distance between the slide mechanism to which the one droplet ejecting section is fitted and the other droplet ejecting sections is not more than 40% or less a length of the beam member measuring in the one direction.

According to the embodiment, the distance between the slide mechanism to which the one droplet ejecting section is fitted and other droplet ejecting sections is 40% or less, particularly desirably 12% or less, of the one-direction length of the beam member. Therefore, the other droplet ejecting sections located within a range of 40% or less, particularly desirably 12% or less, of distances from the one droplet ejecting section can be moved without deteriorating the landing position precision of droplet from the one droplet ejecting section during the ejection operation of the one droplet ejecting section.

Meanwhile, during the ejection operation of the one droplet ejecting section, acceleration changes in speed changes of other droplet ejecting sections located 40%, particularly desirably 12% or more, of distances from the one droplet ejecting section can be made sharp. Thus, the other droplet ejecting sections can be moved at further higher speed, so that the time required for application for the restoration of the substrate or the like can be shortened.

According to the droplet applying apparatus of the invention, the droplet applying apparatus includes the at least one beam member that is movable relative to the base, the plurality of droplet ejecting sections that are movably fitted to the beam member, and the control section for, during ejection operation of one of the droplet ejecting sections, performing such control as to effectuate gentle acceleration changes in speed changes of the other droplet ejecting sections while the other droplet ejecting sections are being moved. Thus, the droplet applying apparatus is enabled to apply droplets to specified portions (e.g., coloring failure portions) of the substrate with high efficiency and to improve the landing position precision of droplets to the substrate by the droplet ejecting sections.

### BRIEF DESCRIPTION OF THE DRAWINGS

Fig. 1A is a perspective view showing an embodiment of the droplet applying apparatus of the present invention;
Fig. 1B is a plan view of the droplet applying apparatus;
Fig. 2 is a sectional view taken along the line C - C of Fig. 1A;
Fig. 3 is a function explanatory view of the droplet applying apparatus during carry-in or -out of the substrate;
Fig. 4 is a sectional view taken along the line E - E of Fig. 1B;
Fig. 5 is a partial sectional view as viewed in Y direction of Fig. 1A;
Fig. 6 is a partial sectional view as viewed in X direction of Fig. 1A;
Fig. 7A is a bottom view of a droplet ejecting section;
Fig. 7B is a bottom view of another droplet ejecting section;
Fig. 8A is a function explanatory view showing a state at an end of substrate processing;
Fig. 8B is a function explanatory view showing a state that the substrate is carried out;
Fig. 8C is a function explanatory view showing a state that the substrate is carried in;
Fig. 9A is a side view of a non-ejection detecting mechanism;
Fig. 9B is a bottom view of a non-ejection detecting mechanism;
Fig. 10A is a function explanatory view showing substrate alignment operation;
Fig. 10B is a function explanatory view showing substrate alignment operation;
Fig. 11 is an enlarged bottom view of an image pickup member;
Fig. 12 is a flowchart showing the alignment operation;
Fig. 13A is an explanatory view showing a field of view of a low-magnification mode camera unit in one image pickup member;
Fig. 13B is an explanatory view showing a field of view of a low-magnification mode camera unit in the other image pickup member;
Fig. 14A is an explanatory view showing a field of view of a high-magnification mode camera unit in one image pickup member;
Fig. 14B is an explanatory view showing a field of view of a high-magnification mode camera unit in the other image pickup member;
Fig. 15A is a function explanatory view showing measurement of droplet landing positions with an observation camera;
Fig. 15B is a function explanatory view showing measurement of droplet landing positions with an observation camera;
Fig. 16A is a function explanatory view showing a state that an arm member has moved rightmost in the drawing sheet in the process of droplet dropping to the substrate;
Fig. 16B is a function explanatory view showing a state that an arm member has moved leftmost in the drawing sheet in the process of droplet dropping to the substrate;
Fig. 17 is a function explanatory view showing an operation that droplets are ejected to the substrate by droplet ejecting sections;
Fig. 18A is a function explanatory view showing an operation that droplets are ejected from the droplet ejecting section to defect portions;
Fig. 18B is a function explanatory view showing an operation that droplets are ejected from the droplet ejecting section to defect portions;
Fig. 18C is a function explanatory view showing an operation that droplets are ejected from the droplet ejecting section to defect portions;
Fig. 18D is a function explanatory view showing an operation that droplets are ejected from the droplet ejecting section to defect portions;
Fig. 19A is a function explanatory view showing recovery of a defect portion under a condition that a pixel longitudinal direction of the defect portion is perpendicular to the arm member moving direction;
Fig. 19B is a function explanatory view showing recovery of a defect portion under a condition that a pixel longitudinal direction of the defect portion is perpendicular to the arm member moving direction;
Fig. 19C is a function explanatory view showing recovery of a defect portion under a condition that a pixel longitudinal direction of the defect portion is perpendicular to the arm member moving direction;
Fig. 20A is a function explanatory view showing recovery of a defect portion under a condition that a pixel longitudinal direction of the defect portion is the arm member moving direction;
Fig. 20B is a function explanatory view showing recovery of a defect portion under a condition that a pixel longitudinal direction of the defect portion is the arm member moving direction;
Fig. 20C is a function explanatory view showing recovery of a defect portion under a condition that a pixel longitudinal direction of the defect portion is the arm member moving direction;
Fig. 21A is a first process view for explaining a method of recovering defects of the substrate;
Fig. 21B is a second process view for explaining a method of recovering defects of the substrate;
Fig. 21C is a third process view for explaining a method of recovering defects of the substrate;
Fig. 21D is a fourth process view for explaining a method of recovering defects of the substrate;
Fig. 21E is a fifth process view for explaining a method of recovering defects of the substrate;
Fig. 22A is a graph showing speed changes of a droplet ejecting section in the invention;
Fig. 22B is a graph showing acceleration changes of a droplet ejecting section in the invention;
Fig. 23 is a view showing droplet landing positions in the invention;
Fig. 24A is a graph showing speed changes of a droplet ejecting section in a comparative example;
Fig. 24B is a graph showing acceleration changes of a droplet ejecting section in the comparative example;
Fig. 25 is a view showing droplet landing positions in the comparative example;
Fig. 26A is a first process view for explaining another method of recovering defects of the substrate;
Fig. 26B is a second process view for explaining another method of recovering defects of the substrate; and
Fig. 27 is a view showing droplet landing positions in the present invention.

### DETAILED DESCRIPTION OF THE INVENTION

Hereinbelow, the present invention will be described in detail by embodiments thereof illustrated in the accompanying drawings.

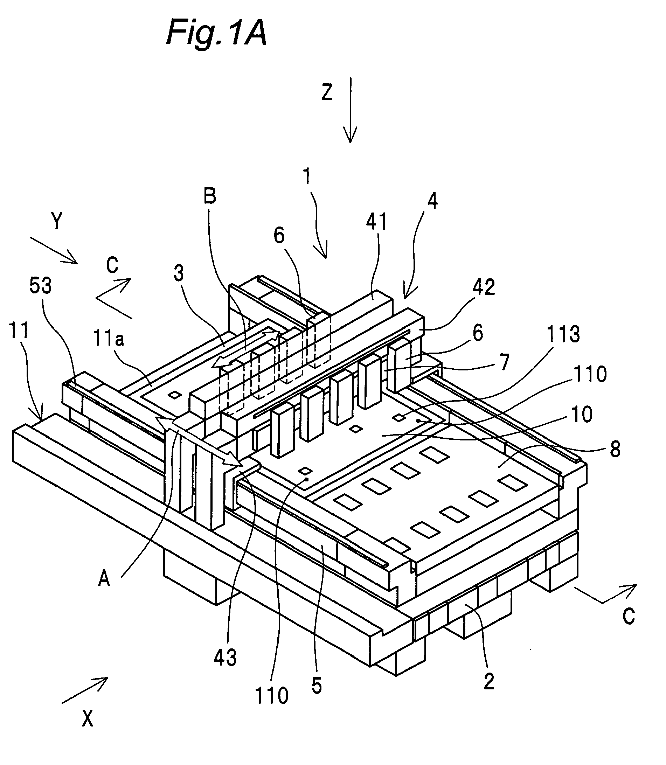

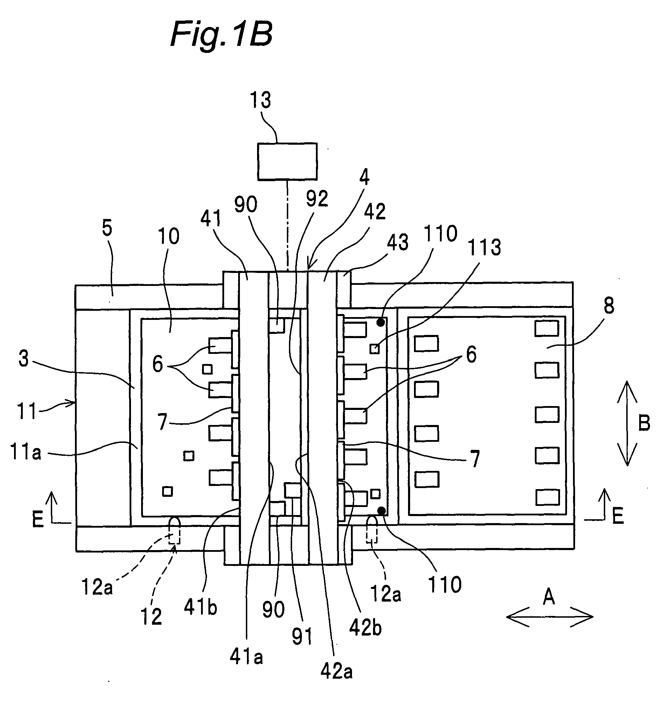

Figs. 1A and 1B are constructional views showing an embodiment of a droplet applying apparatus of the invention. The droplet applying apparatus 1 of the invention includes: a base 11 having a mounting surface 11a on which a substrate 10 is to be mounted; an arm member 4 which is fitted to the base 11 so as to be movable relative to the base 11; a plurality of droplet ejecting sections 6 which are movably fitted to the arm member 4 and which eject droplets to the substrate 10 mounted on the mounting surface 11a; and a control section 13 for controlling movement or stop of the plurality of droplet ejecting sections 6.

The substrate 10 is, for example, a color filter substrate to be used for liquid crystal displays or the like. The substrate 10 has defect portions 113 such as coloring failures. Two alignment marks 110 are formed near end faces of the substrate 10. The alignment marks 110 have only to be at least two in quantity.

The base 11 has a base body 2, and a mounting stage 3 which is mounted on the base body 2 and which moves during carry-in and carrying of the substrate 10. That is, a top surface of the mounting stage 3 includes the mounting surface 11a.

The arm member 4, which is so set as to confront and stretch over the mounting surface 11a in one direction of the mounting surface 11a, is reciprocatively movable in another direction of the mounting surface 11a. The one direction and the other direction are perpendicular to each other. The one direction refers to an arrow B direction, and the other direction refers to an arrow A direction.

In short, the arm member 4, which is a so-called gantry, is formed into an arch shape so as to cross the mounting stage 3 sideways. The arm member 4 has a length of about 5 m. The arm member 4 can be reciprocatively moved in the arrow A direction by arm member moving mechanisms 5 provided on the base body 2.

More specifically, on the base body 2, the arm member moving mechanisms 5 extending in the arrow A direction are provided on both sides of the mounting stage 3 in the arrow B direction, respectively. The arm member 4 has levitative moving mechanisms 43 fitted to the arm member moving mechanisms 5, respectively, and a first beam member 41 and a second beam member 42 stretched over the two levitative moving mechanisms 43, 43, respectively.

The first beam member 41 and the second beam member 42, extending in the arrow B direction and confronting the mounting surface 11a, are placed side by side in the arrow A direction so as to be spaced from each other.

On the first beam member 41 and the second beam member 42 are provided slide mechanisms 7 in correspondence to the plurality of droplet ejecting sections 6, respectively. On the slide mechanisms 7, the droplet ejecting sections 6 are fitted so as to be movable relative to the beam members 41, 42.

Each of the slide mechanisms 7 is an air-slide type slide mechanism. In this case, the air-slide type slide mechanism is so formed that part of the slide mechanism fitted to the beam members 41, 42 and part of the slide mechanism fitted to the droplet ejecting section 6 are relatively slid while kept out of contact.

That is, the first beam member 41 and the second beam member 42 have two flat surfaces, respectively, extending in the arrow B direction and directed toward mutually opposite sides of the arrow A direction. Then, slide mechanisms 7 for moving the droplet ejecting sections 6 along a direction (arrow B direction) different from the moving direction (arrow A direction) of the arm member 4 are mounted on one flat surface (fitting surface 41b) of the first beam member 41 opposite to its flat surface (confronting surface 41a) confronting the second beam member 42, as well as on one flat surface (fitting surface 42b) of the second beam member 42 opposite to its flat surface (confronting surface 42a) confronting the first beam member 41. The droplet ejecting sections 6 mounted on the slide mechanisms 7 are movable in the arrow B direction within movable ranges on the slide mechanisms 7, respectively. The droplet ejecting sections 6 eject and apply droplets to specified portions of the substrate 10 such as the defect portions 113.

Four droplet ejecting sections 6 are mounted on the fitting surface 41b of the first beam member 41, and five droplet ejecting sections 6 are mounted on the fitting surface 42b of the second beam member 42, where totally nine droplet ejecting sections 6 are fitted to the slide mechanisms 7, respectively, independently of one another. Then, all of the droplet ejecting sections 6 are moved in the arrow B direction, independently of one another, on their respective slide mechanisms 7 based on control commands from the apparatus.

Each of the droplet ejecting sections 6, which has a head ejecting surface with an opening formed therein for ejection of droplets, the head ejecting surface being a surface generally parallel and closest to the mounting surface 11a, drops droplets from the head ejecting surface to the substrate 10 on the mounting surface 11a based on control commands from the apparatus.

While the one droplet ejecting section 6 is performing ejection operation, the control section 13 exerts such control that other droplet ejecting sections 6 at least present proximate to the one droplet ejecting section 6, while moving, are subject to gentler acceleration changes in speed changes of the other droplet ejecting sections 6.

A distance between the slide mechanism 7 to which the one droplet ejecting section 6 is fitted and the slide mechanisms 7 to which the other slide mechanisms 7 are fitted is not more than 0.6 m. In other words, the distance between the slide mechanism 7 to which the one droplet ejecting section 6 is fitted and the slide mechanisms 7 to which the other slide mechanisms 7 are fitted is not more than 12% of a length of the beam members 41, 42 in the arrow B direction.

Further provided are image pickup members 90 as image pickup devices which are placed between the first beam member 41 and the second beam member 42 and which are fitted to the first beam member 41, as well as an observation camera 91 as an image pickup device which is fitted to the second beam member 42.

Each of the image pickup members 90 picks up an image of the substrate 10 for adjustment of the posture of the substrate 10 on the mounting surface 11a. The image pickup members 90, each having a low-magnification mode and a high-magnification mode, detect the alignment marks 110 of the substrate 10 mounted on the mounting surface 11a. The image pickup members 90 are fitted on the confronting surface 41a of the first beam member 41 at both end portions of the first beam member 41 in the arrow B direction, respectively.

The observation camera 91 picks up an image of the substrate 10 for correction of landing positions onto the substrate 10, or picks up an image of the substrate 10 for observation of landing state on the substrate 10. The observation camera 91 is fitted on the confronting surface 42a of the second beam member 42.

A posture adjustment member 12 is provided on the base 11. The posture adjustment member 12 adjusts the posture of the substrate 10 mounted on the mounting surface 11a based on a detection result of the image pickup members 90.

The posture adjustment member 12 presses different two points on one end face of the substrate 10, as well as one point on the other end face of the substrate 10 perpendicular to its one end face, to thereby adjust the posture of the substrate. That is, the posture adjustment member 12 has a pin 12a for pressing one end face of the substrate 10, and a pin (not shown) for pressing the other end face of the substrate 10.

A movement control section (not shown) for controlling movement of the arm member 4 is connected to the arm member 4. When the substrate 10 is mounted on the mounting surface 11a, the movement control section moves the arm member 4 to move the image pickup members 90 to specified positions relative to the mounting surface 11a and keep the image pickup members 90 in a standby state. It is noted that the specified positions refer to, for example, positions for detecting the alignment marks 110 of the substrate 10.

On the base body 2, a maintenance mechanism 8 is provided in adjacency to the mounting stage 3. The maintenance mechanism 8 has a mechanism for capping the droplet ejecting sections 6 at their ejecting surfaces in a non-use mode, a mechanism for detecting failure ejection openings, a mechanism for recovering failure ejection openings, and the like. Then, in maintenance operation, the arm member 4 is moved to immediately above the maintenance mechanism 8 by the arm member moving mechanisms 5, so that various types of maintenance operations are performed on the droplet ejecting sections 6 by the maintenance mechanism 8.

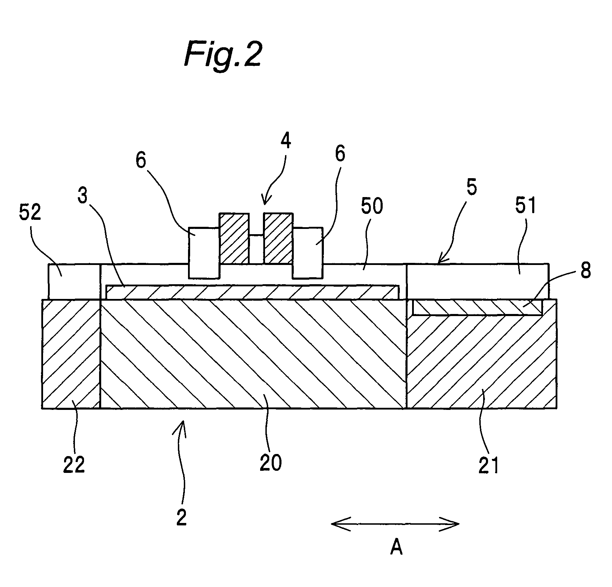

As shown in Fig. 2, the base body 2 has a main stage 20 positioned in a center, and a first sub-stage 21 and a second sub-stage 22 positioned on both sides of the main stage 20 in the arrow A direction, respectively. It is noted that Fig. 2 is depicted with the substrate 10 omitted.

The first sub-stage 21 has the maintenance mechanism 8. The main stage 20, the first sub-stage 21 and the second sub-stage 22 are mechanically connected to one another.

The main stage 20, which is a high-precision stage made of granite, keeps the mounting stage 3 correctly fixed while droplets are being ejected from the droplet ejecting sections 6 toward the substrate 10 on the mounting stage 3.

The first sub-stage 21, on which the maintenance mechanism 8 is mounted, does not need to be manufactured at high precision, compared with the main stage 20.

The second sub-stage 22 is a stage to be used to move the mounting stage 3 to one end portion of the apparatus when the substrate 10 is carried in onto the mounting stage 3, or when the substrate 10 is carried out from on the mounting stage 3.

A main moving mechanism 50, a first sub-moving mechanism 51 and a second sub-moving mechanism 52 are mounted on the individual stages 20, 21, 22, respectively. The moving mechanisms 50, 51, 52 are connected to one another, with joints included therein, so that the arm member 4 is enabled to freely move over the moving mechanisms 50, 51, 52.

As shown in Figs. 1A and 1B, the arm member 4 keeps normally air-levitated against the arm member moving mechanisms 5. That is, the arm member 4 is made movable by linear motor control between magnet type linear scales 53 provided on the arm member moving mechanisms 5 and the levitative moving mechanisms 43 of the arm member 4. It is noted that the arm member 4 is moved to an arbitrary position in the arrow A direction by the control section 13.

Then, the arm member moving mechanisms 5 and the magnet type linear scales 53 are continuously constructed so as to be enabled to freely move over the three stages 20, 21, 22. It is noted that an unshown common vibration isolator is provided below the base body 2.

A plurality of unshown minute holes are formed in the top surface of the mounting stage 3. All of these holes are coupled to an unshown suction mechanism, and the substrate 10 is sucked and fixed onto the mounting stage 3 by suction control with the suction mechanism, while the substrate 10 is released from on the mounting stage 3 by release control with the suction mechanism. The top surface of the mounting stage 3 is made of a granite surface plate having good flatness, being parallel to the ejecting surfaces of the droplet ejecting sections 6.

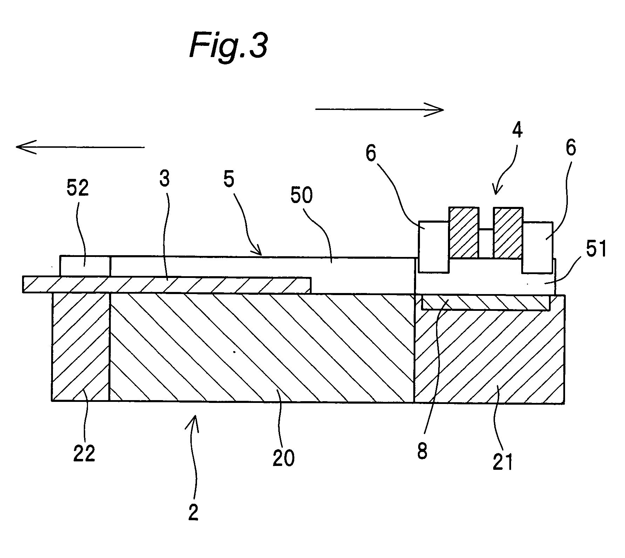

The mounting stage 3, which is movable in the arrow A direction on unshown slide rails provided on the base body 2 by linear motor control, moves to an end portion farther from the maintenance mechanism 8 as shown in Fig. 3 when the substrate 10 is carried in or out. It is noted that the arm member 4 moves to just above the maintenance mechanism 8 when the substrate 10 is carried in or out.

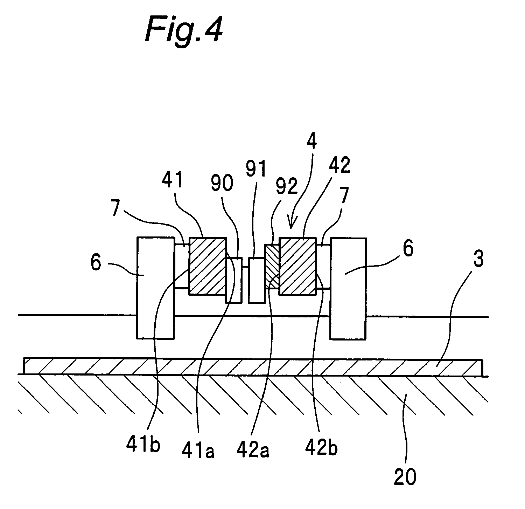

As shown in Figs. 1B and 4, four sets of the droplet ejecting section 6 and the slide mechanism 7 are fitted on the fitting surface 41b of the first beam member 41. The two image pickup members 90 are fitted on the confronting surface 41a of the first beam member 41.

Five sets of the droplet ejecting section 6 and the slide mechanism 7 are fitted on the fitting surface 42b of the second beam member 42. A slide mechanism 92 having a width generally equal to the B-direction width of the mounting stage 3 is fitted on the confronting surface 42a of the second beam member 42. The observation camera 91 is movably fitted on the slide mechanism 92, the observation camera 91 being movable in the arrow B direction.

All of the slide mechanisms 7 are staggered in the arrow B direction as viewed from the top surface of the mounting stage 3. With regard to two slide mechanisms 7, 7 adjacent to each other in the arrow A direction, slidable areas of the two slide mechanisms 7, 7 partly overlap with each other with respect to the arrow B direction. The larger overlapping movable area is more preferable, desirably the overlapping ratio being one third or more.

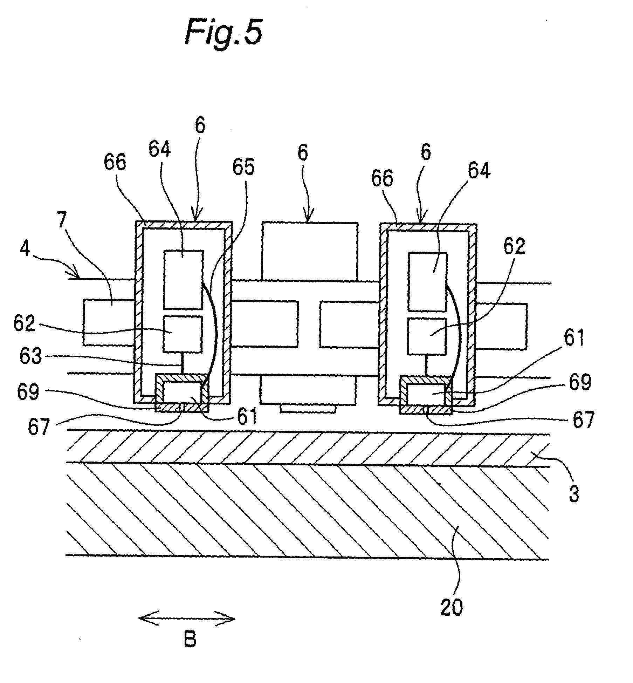

As shown in Fig. 5, the droplet ejecting sections 6, which are mounted on the slide mechanisms 7 set on the arm member 4, are movable in the arrow B direction independently of one another.

Each of the droplet ejecting sections 6 has a box frame 66, an ejecting element 61 housed in the box frame 66, a drive control circuit 62, an electric connection cable 63, an ink tank 64 and an ink tube 65. The box frame 66 moves on the slide mechanism 7.

A nozzle plate 69 is bonded to a surface of the ejecting element 61 parallel to the top surface of the mounting stage 3, and a plurality of nozzle openings 67 are formed in the nozzle plate 69. The diameter of each nozzle opening 67 is 10 -to 20 µm.

The ejecting element 61 is such a common one that, for example, after recesses as a plurality of ink chambers are formed in a piezoelectric-material substrate, electrodes are formed at part of partition-wall side faces, in which arrangement an electric field is applied to between both side faces of the partition wall so that the partition wall itself is shear-deformed to generate ejection energy.

The drive control circuit 62 is connected to an unshown drive control system by an unshown cable to exert ejection control.

It is preparatorily arranged that with the substrate 10 mounted on the mounting stage 3, the distance between the droplet ejecting surface, which is the lowermost surface of the nozzle plate 69, and the top surface of the substrate 10 becomes 0.5 mm to 1 mm.

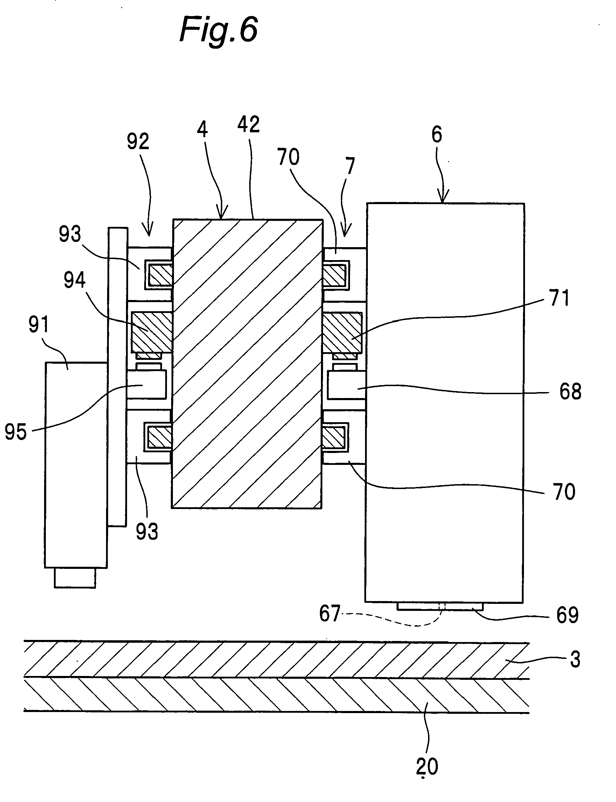

As shown in Fig. 6, each of the slide mechanisms 7 fitted to the second beam member 42 and intended for the droplet ejecting sections 6 has two rows of LM guides 70, 70 (made by THK Co., Ltd.) placed above and below, and a linear guide 71 placed between the two rows of LM guides 70, 70.

One portion of each LM guide 70 is fitted to the droplet ejecting section 6, while another portion of the LM guide 70 is fitted to the second beam member 42. The one portion of the LM guide 70 and the other portion of the LM guide 70 are slidable relative to each other.

The linear guide 71 is fitted to the second beam member 42. Drive control of a linear drive mechanism 68 that is fitted to the droplet ejecting section 6 so as to confront the linear guide 71 allows the droplet ejecting section 6 to be moved to a specified position at a shortage or depth (in the arrow B direction in Fig. 1A) of the drawing sheet of Fig. 6.

The linear guide 71 is formed of miniature N-pole and S-pole permanent magnets arrayed alternately and regularly. The linear drive mechanism 68 is capable of freely generating N poles and S poles by AC control, making it possible to exert positional control of the droplet ejecting sections 6 on the slide mechanisms 7 by magnet force of the linear guide 71 and the linear drive mechanism 68.

An effective movement stroke of the LM guides 70 is 250 mm, and the linear guide 71 is set over a range more than this effective stroke. The slide mechanisms 7 fitted to the first beam member 41 are also similar in construction, and so their description is omitted.

As shown in Fig. 6, the slide mechanism 92 provided for use with the observation camera 91 and fitted to the second beam member 42, being similar in construction to the slide mechanisms 7, has two rows of LM guides 93, 93 (made by THK Co., Ltd.) placed above and below, and a linear guide 94 placed between the two rows of LM guides 93, 93.

One portion of each LM guide 93 is fitted to the observation camera 91, while another portion of the LM guide 93 is fitted to the second beam member 42. The one portion of the LM guide 93 and the other portion of the LM guide 93 are slidable relative to each other.

The linear guide 94 is fitted to the second beam member 42. Drive control of a linear drive mechanism 95 that is fitted to the observation camera 91 so as to confront the linear guide 71 allows the observation camera 91 to be moved to a specified position at a shortage or depth (in the arrow B direction in Fig. 1A) of the drawing sheet of Fig. 6. The linear guide 94 and the linear drive mechanism 95 are similar in construction to the linear guide 71 and the linear drive mechanism 68, and so their description is omitted. The effective movement stroke of the LM guides 93 is 2500 mm, and the linear guide 94 is set over a range more than this effective stroke.

The observation camera 91 is enabled to output address information of the substrate 10 relative to the alignment marks 110 by an arrow-A-direction information acquisition function provided in the arm member moving mechanisms 5 as well as an arrow-B-direction information acquisition function provided in the slide mechanism 92.

The observation camera 91 is principally enabled to observe a landing image of landing on the substrate 10 by the droplet ejecting sections 6, and output ejection states of the respective droplet ejecting sections 6 or addresses of the landing position relative to an alignment mark reference.

By using landing position coordinates acquired by the observation camera 91, correction of ejection timing in the arrow A direction is performed for the respective droplet ejecting sections 6, while correction of moving amounts of the slide mechanisms 7 in the arrow B direction is performed, by which droplets can be landed at desired positions on the substrate 10.

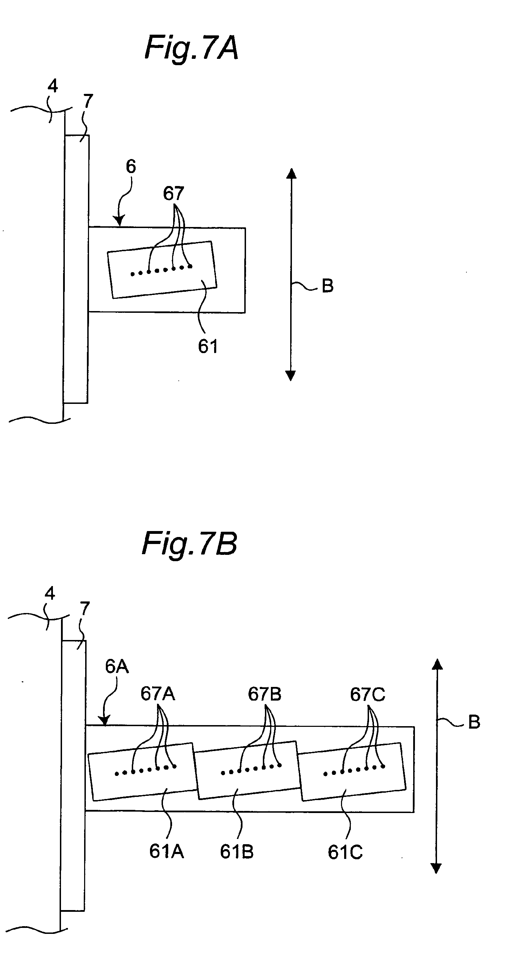

As shown in the bottom view of Fig. 7A, each droplet ejecting section 6 has the ejecting element 61 for ejecting one kind of liquid. The nozzle openings 67 in the bottom face of the droplet ejecting section 6 are arrayed in one row, being inclined by a few degrees from perpendicularity with respect to the arrow B direction. The nozzle openings 67 all eject the same droplet material.

The droplet ejecting section, as shown in Fig. 7B, may be a droplet ejecting section 6A having ejecting elements 61A, 61B, 61C for ejecting three kinds of liquids. That is, this droplet ejecting section 6A has the ejecting element 61A for ejecting a first droplet material, the ejecting element 61B for ejecting a second droplet material, and the ejecting element 61C for ejecting a third droplet material.

Nozzle openings 67A, 67B, 67C of the ejecting elements 61A, 61B, 61C, respectively, are inclined from perpendicularity with respect to the arrow B direction, and projection areas of the nozzle openings 67A, 67B, 67C, respectively, on a vertical plane including the arrow B generally coincide with one another.

In addition, the nozzle openings 67A, 67B, 67C may be minutely movable in the arrow B direction within the droplet ejecting sections 6, respectively.

Next, operation of the droplet applying apparatus having the above-described construction is explained.

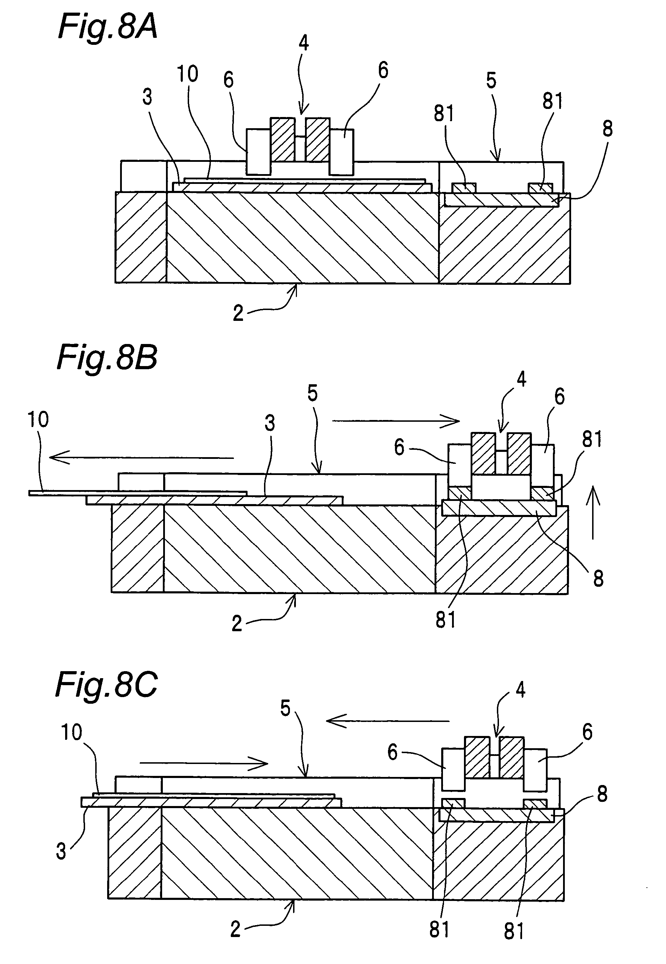

With reference to Figs. 8A, 8B and 8C, carry-out and -in operation of the substrate 10 is described. As shown in Fig. 8A, after the processing with the substrate 10 that has been completely processed, the mounting stage 3, as shown in Fig. 8B, is slid leftward in the drawing sheet while the arm member 4 is moved to just above the maintenance mechanism 8. Then, after the suction of the processing-completed substrate 10 is released, the substrate 10 is delivered to an unshown transfer robot. Thereafter, the transfer robot mounts a next substrate 10 onto the mounting stage 3.

Then, the substrate 10 mounted on the mounting stage 3 is air sucked immediately to the mounting stage 3 as shown in Fig. 8C, and the mounting stage 3 and the arm member 4 are returned to their original positions as shown in Fig. 8A.

During the time duration from the carry-out of the substrate 10 from the mounting stage 3 to the carry-in of the next substrate 10 and further to the return of the mounting stage 3 to the original position, ordinary maintenance operation with the droplet ejecting sections 6 is performed in parallel.

In this maintenance operation, the arm member 4 is moved onto the maintenance mechanism 8, followed by maintenance work.

More specifically, a lower surface of the nozzle plate 69 of the droplet ejecting section 6 is capped with a rubber-made cap member 81 as shown in Fig. 8B. Then, vacuum suction is effected through an air hole provided in a bottom portion of the cap member 81, so that the liquid is forcedly discharged through the nozzle openings 67 of the nozzle plate 69, by which dust or the like of the nozzle openings 67 is removed.

Thereafter, the lower surface of the nozzle plate 69 is wiped off by an unshown wipe blade. Then, the ejection state of the nozzle openings 67 is checked by an unshown non-ejection detecting mechanism. It is noted that the series of these maintenance operations may be done in a sequence different from the above-described one.

The mounting stage 3 on which the new substrate 10 is mounted, and the arm member 4 that has been completed with the maintenance operation of the droplet ejecting sections 6, are moved nearly simultaneously in arrow directions of Fig. 8C so as to be returned to the positions of Fig. 8A.

Next, the maintenance operation for the droplet applying apparatus 1 is explained. While the carry-out/in of the substrate 10 is being executed, or while the droplet ejecting operation to the substrate 10 is kept out of execution for long periods, maintenance operation for the droplet ejecting sections 6 is executed. This maintenance operation includes non-ejection detection, capping, in-cap suction purge and wiping to be done.

In the case where the processing of the next substrate 10 is performed immediately after the foregoing processing of the substrate 10, simultaneously with a command for the foregoing carry-out operation of the substrate 10, the arm member 4 with the droplet ejecting sections 6 mounted thereon is given a command for movement to just above the maintenance mechanism 8.

The maintenance mechanism 8 has a non-ejection detecting mechanism for detecting ejection failures of the droplet ejecting sections 6. The non-ejection detecting mechanism is provided for each of the droplet ejecting sections 6.

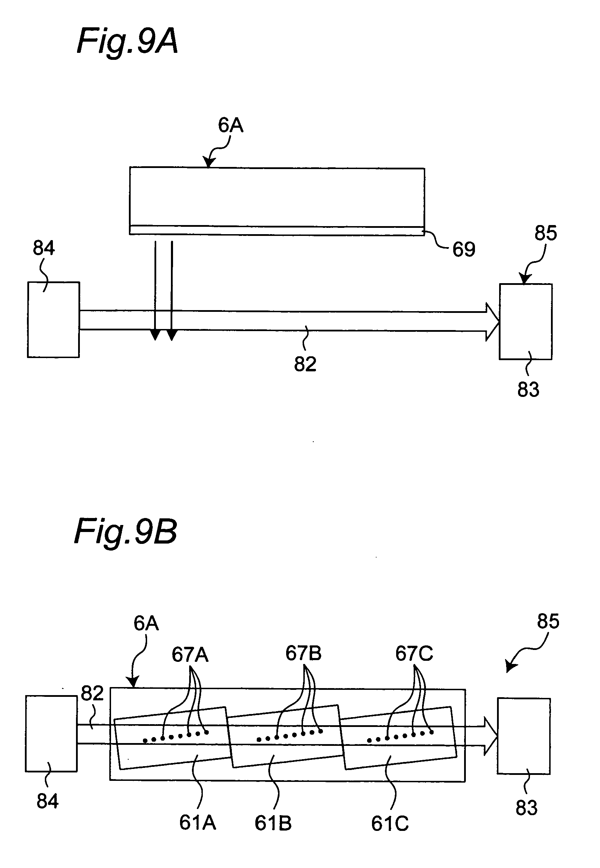

As shown in Figs. 9A and 9B, the non-ejection detecting mechanism 85 has a laser-light emitting element 84 and a laser-light receiving element 83. It is noted that the droplet ejecting section 6A shown in Fig. 7B is used as the droplet ejecting section.

The laser-light emitting element 84 and an unshown laser-light emitting circuit, upon receiving a command for non-ejection detection, apply a laser beam 82 continuously toward the laser-light receiving element 83. A received-light-quantity measuring means connected to the laser-light receiving element 83 stores therein an ordinary received light quantity.

The application direction of the laser beam 82 is generally parallel to the top surface of the substrate 10 and generally parallel to the ejecting surface of the droplet ejecting section 6A (lower surface of the nozzle plate 69).

The diameter of the laser beam 82 is 1 mm, and droplets ejected from all the nozzle openings 67A, 67B, 67C of the one droplet ejecting section 6A pass through within the optical axis of the laser beam 82.

The laser-light emitting element 84 and the laser-light receiving element 83 have a fine adjustment moving mechanism. This fine adjustment moving mechanism adjusts the positions of the laser-light emitting element 84 and the laser-light receiving element 83 in case that droplets do not pass through within the optical axis of the laser beam 82.

Operation of the non-ejection detecting mechanism 85 is explained below.

First, droplets are ejected from the first ejecting element 61A during a certain time period, after which a light quantity from the received-light-quantity measuring means is read and then compared with the ordinary received light quantity to measure an intercepted light quantity, followed by making a decision as to whether or not the measured value is within a range of set values that have preliminarily been set. If the measured value is within the range of set values, the ejection is regarded as a normal ejection, while if the measured value is not within the range of set values, the ejection is regarded as an ejection failure.

Next, for the second ejecting element 61B and the third ejecting element 61C, similar ejection control and intercepted-light-quantity measurement are performed in succession, by which the presence or absence of any ejection failure is checked for all the nozzle openings 67A, 67B, 67C of the droplet ejecting section 6A.

Without any ejection failure, the droplet ejecting section 6A is moved to the cap position, where capping is performed until the carry-in operation of the substrate 10 is almost completed.

With some ejection failure, commonly known recovery operation is performed in which, for example, the droplet ejecting section 6A is moved to the cap position and then capped, the cap being evacuated to effect forced discharge from the nozzle openings, followed by release of the cap, wiping and once more execution of non-ejection detection. Then, the non-ejection detection and the recovery operation are executed at most several times until the ejection failure is eliminated. If the ejection failure is not corrected, the result is outputted to the apparatus.

In addition, in a case where the comparison between the last non-ejection detection result immediately before the processing of the substrate 10 and the first non-ejection detection result executed during the carry-out of the substrate 10 yields recognition of a change in ejection state, the foregoing processing of the substrate 10 is regarded as inappropriate, and the substrate 10 may be discarded or passed to restoration process.

Next, alignment operation of the substrate 10 is explained.

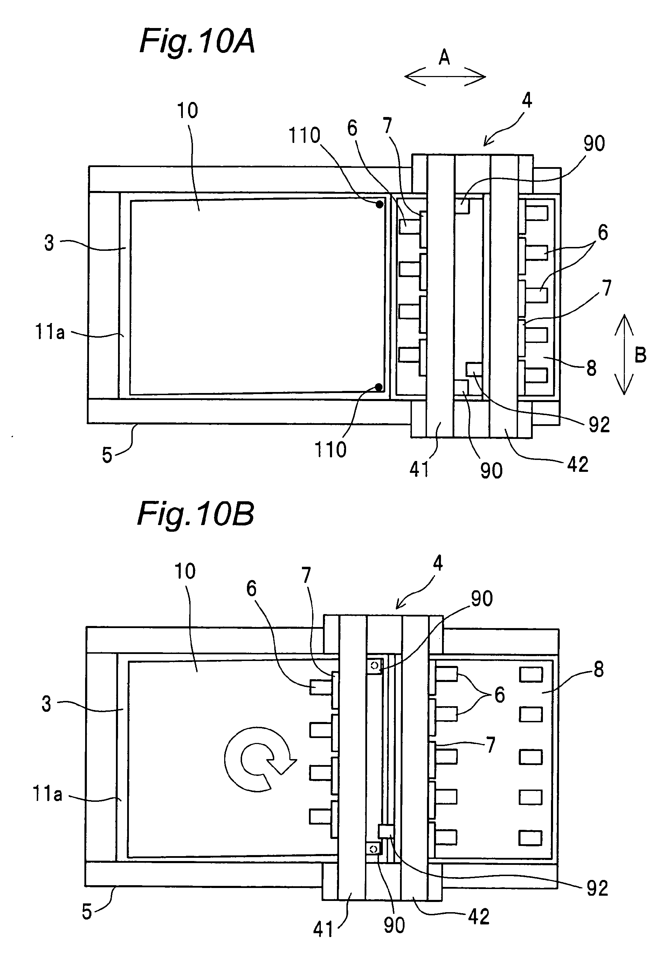

The two image pickup members 90, 90 fixed to the arm member 4 are moved integrally with the arm member 4 from the position of Fig. 10A to the position of Fig. 10B. Then, based on image information of the image pickup members 90, the posture of the substrate 10 is corrected to the arrow direction of Fig. 10B by the posture adjustment member 12 shown in Fig. 1B.

On the substrate 10, the two alignment marks 110, 110 of high precision are preliminarily provided. The droplet application position of the substrate 10 is predetermined by referencing the alignment marks 110.

The alignment marks 110 are concentric marks, and a pitch difference between the two alignment marks 110, 110 is no more than 2 µm. The two image pickup members 90, 90 are set on the arm member 4 with a pitch equal to the pitch of the two alignment marks 110, 110.

Also, the reference position of an image pickup member 90 and the landing position of a droplet ejecting section 6 are preliminarily corrected by correction operation with the observation camera 91.

Therefore, by achieving coincidence between the alignment mark 110 of the substrate 10 and the reference position of the image pickup member 90, the landing position of a droplet and the position to apply the droplet thereto can be made coincident with each other.

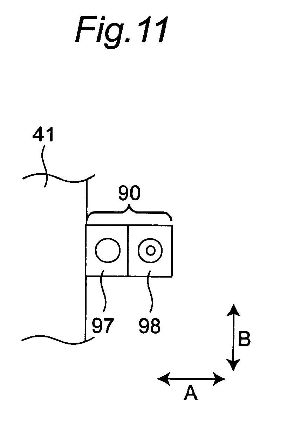

As shown in Fig. 11, the image pickup member 90 has a high-magnification mode camera unit 98 and a low-magnification mode camera unit 97. The high-magnification mode camera unit 98 and the low-magnification mode camera unit 97 are fitted to the arm member 4 side by side in the arrow A direction. That is, the low-magnification mode camera unit 97 and the high-magnification mode camera unit 98 are fitted in array to the first beam member 41 in this order.

The alignment reference position of the low-magnification mode camera unit 97 and the alignment reference position of the high-magnification mode camera unit 98 are preliminarily subjected to positional correction so as to be coincident with each other by properly moving the arm member 4.

The low-magnification mode camera unit 97 has a camera mechanism having a focus power of 0.5, thus enabled to pick up an image on the substrate 10 by a CCD camera of 2000000 pixels (1400 × 1400 pixels), where the image pickup field area is roughly 10 mm square and the image resolution is about 13 µm.

The high-magnification mode camera unit 98 has a camera mechanism having a focus power of 10, thus enabled to pick up an image on the substrate 10 by a CCD camera of 1400000 pixels (1400 × 1000 pixels), where the image pickup field area is roughly 0.5 mm square and the image resolution is about 0.7 µm.

The low-magnification mode camera unit 97 and the high-magnification mode camera unit 98 are connected to unshown image processing means, respectively.

In the image processing means, alignment mark images picked up by the camera units 97, 98 are binarized to determine a centroidal position of the marks, which is taken as a current alignment-mark center position.

Determining the alignment-mark center position by picking up images of the two alignment marks 110, 110 on the substrate 10 with the two camera units 97, 98 makes it possible to determine alignment quantities for rotational movement and linear movement of the substrate 10.

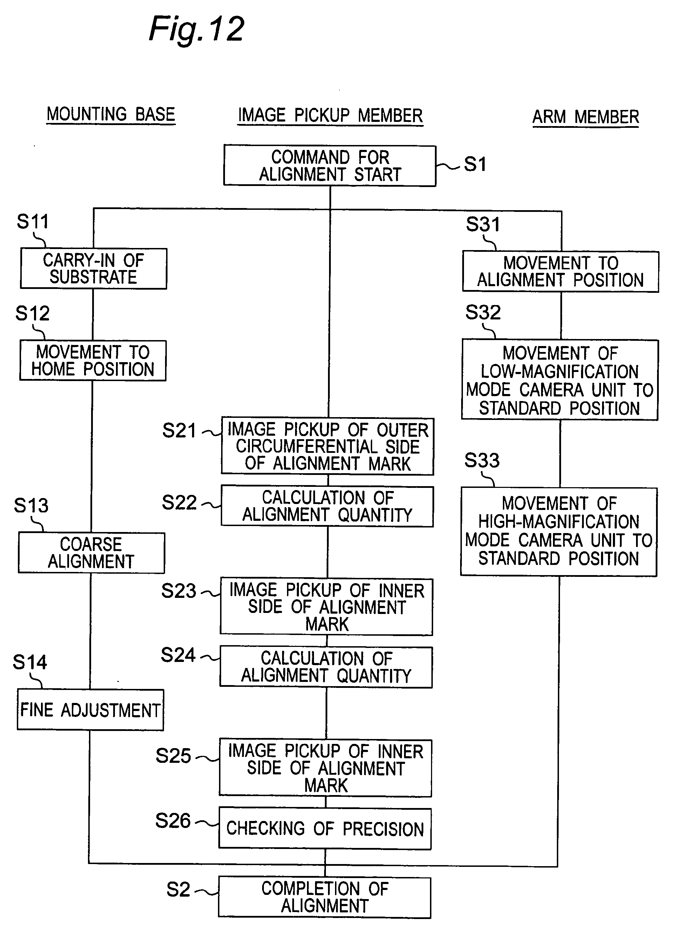

Fig. 12 is a flowchart describing, in combination, movements of the mounting stage 3, the image pickup members 90 and the arm member 4 with respect to the alignment operation.

When a command for alignment start is issued (S1), the unshown transfer robot mounts the substrate 10 onto the mounting stage 3 (S11), and the mounting stage 3 is moved to an alignment home position (S12).

During this operation, the arm member 4 is moved to the alignment position (S31) to move the low-magnification mode camera unit 97 to an alignment standard position where the alignment mark 110 of the substrate 10 is to be detected (S32).

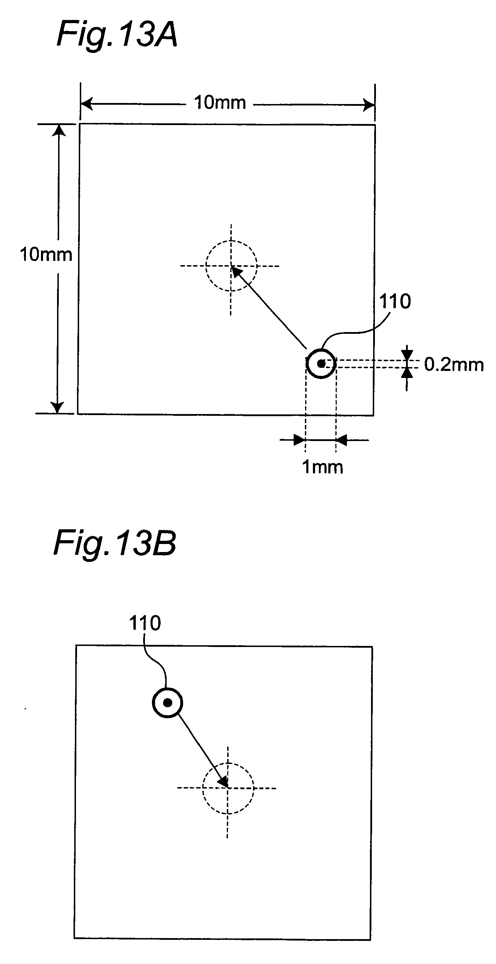

In this connection, Figs. 13A and 13B show fields of view of the low-magnification mode camera unit 97 resulting when the movements of the mounting stage 3 and the arm member 4 are completed. Fig. 13A shows a field of view of the low-magnification mode camera unit 97 of one image pickup member 90, and Fig. 13B shows a field of view of the low-magnification mode camera unit 97 of the other image pickup member 90.

The alignment mark 110 has a concentric shape, in which the outer ring for coarse alignment has an outer diameter of 1 mm, while the inner black dot for fine alignment has a diameter of 0.2 mm.

The precision with which the transfer robot mounts the substrate 10 onto the mounting stage 3 is ±3 mm from an ideal position. When the low-magnification mode camera unit 97 having a field area of 10 mm square is moved to the alignment standard position, the alignment mark 110 is necessarily contained in the field of view as shown in Figs. 13A and 13B.

That is, the low-magnification mode camera unit 97 has a field of view more than the substrate-mounting precision of the transfer robot, thus making it possible to immediately execute alignment operation without performing another alignment operation after the substrate mounting. Moreover, it is unnecessary to additionally provide any sequence or mechanism for searching the surroundings.

In short, the image pickup members 90, in a low-magnification mode, each have enough field of view to detect the alignment mark 110 of the substrate 10 before the adjustment by the posture adjustment member 12. Therefore, it is unnecessary to detect the alignment mark 110 to make the alignment mark 110 contained in the field of view of the image pickup member 90 before adjusting the posture of the substrate 10, and moreover the alignment detection mechanism does not need to be additionally provided, and yet the time taken before adjusting the posture of the substrate 10 can be eliminated.

Thereafter, as shown in Fig. 12, images of the alignment marks 110, 110 are picked up by the two low-magnification mode camera units 97, 97, respectively (S21), the centroidal position of the outer ring is read, and an alignment quantity that is a value to which the substrate 10 should be moved is calculated from deviated directions and deviation quantities of the two marks from their reference position (S22).

Also, at a time point when the image pickup of the alignment marks 110 is completed (S21), the arm member 4 is moved so that the high-magnification mode camera unit 98 is moved to the alignment standard position where the alignment marks 110 of the substrate 10 are to be detected (S33).

After the alignment quantity is determined (S22), coarse alignment of the substrate 10 is executed based on the above-acquired information by the posture adjustment member 12 (S13).

It is noted here that the term, coarse alignment, refers to moving the alignment mark 110 to the alignment reference position indicated by dotted cruciform lines as shown in Figs. 13A and 13B.

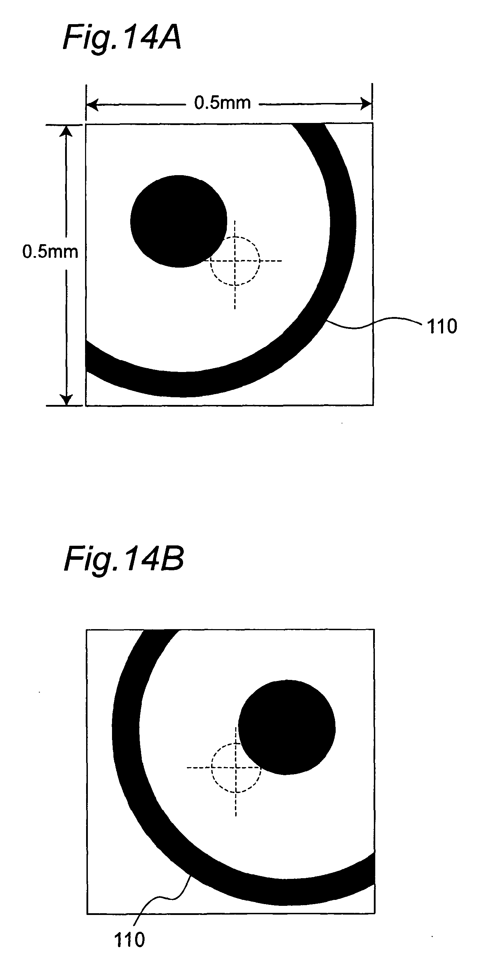

Thereafter, after the completion of the coarse alignment and the movement of the high-magnification mode camera unit 98, the alignment mark 110 is minutely deviated in the field of view of the high-magnification mode camera unit 98 as shown in Figs. 14A and 14B. Fig. 14A shows a field of view of the high-magnification mode camera unit 98 of one image pickup member 90, while Fig. 14B shows a field of view of the high-magnification mode camera unit 98 of the other image pickup member 90.

As to the reason of the above deviations, with the field of view of the low-magnification mode camera unit 97, the image resolution is 13 µm and there is a possibility that an error of several tens of micrometers with a deviation of image detection included may occur. As a result, strict deviations could not be resolved even if the coarse alignment is executed.

Thereafter, as shown in Fig. 12, an image of the black dot inside the alignment mark 110 is picked up by the high-magnification mode camera unit 98 (S23), a centroidal position of the inner black dot is read, and an alignment quantity that is a value to which the substrate 10 should be moved is calculated from deviated directions and deviation quantities of the two marks from their reference position (S24). Based on the resulting alignment quantity, fine adjustment of the substrate 10 is executed by the posture adjustment member 12 (S14).

It is noted here that the term, fine alignment, refers to moving the alignment mark 110 to the alignment reference position indicated by dotted cruciform lines as shown in Figs. 14A and 14B.

In this fine adjustment, the image resolution is 0.6 µm, and thus at least 2 µm or lower alignment precision can be achieved.

Thereafter, although not indispensable, an image of the black dot inside the alignment mark 110 is picked up once again by the high-magnification mode camera unit 98 (S25), and it is checked for precision whether or not any deviation has occurred (S26), thus the alignment being completed (S2).

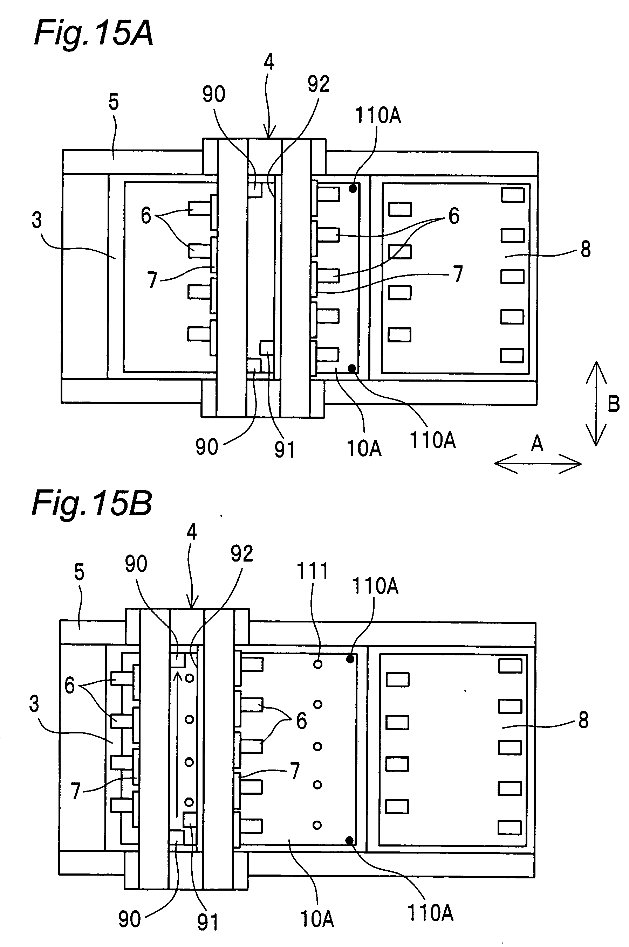

Next, measurement of droplet landing positions by the observation camera 91 is explained with reference to Figs. 15A and 15B.

The observation camera 91 is used to acquire information for execution of landing position correction in replacement of the ejecting elements 61 of the droplet ejecting sections 6, or to reconfirm the landing positions during the use of the ejecting elements 61. The observation camera 91 performs image pickup of any arbitrary position on the apparatus top surface as well as determination of the position with the arm member moving mechanisms 5 and the slide mechanism 92.

The image pickup position of the observation camera 91 is outputted by scales internally provided in the arm member moving mechanisms 5 and the slide mechanism 92.

In the observation of droplet landing positions, a dummy substrate 10A on which specified alignment marks 110A similar to those of ordinary substrates 10 are given is carried as the substrate into the apparatus as shown in Fig. 15A, then subjected to substrate posture control as it is normally done. The observation camera 91 picks up images of the two alignment marks 110A, 110A, respectively, on the dummy substrate 10A, by which their positional information is acquired.

Then, the arm member 4 is moved to an arbitrary position of the dummy substrate 10A. Droplets are ejected from the nozzle openings of the individual droplet ejecting sections 6 toward the dummy substrate 10A. In this operation, droplets may be ejected from all the nozzle openings.

In the individual droplet ejecting sections 6, virtual landing positions (ideal landing positions) are recognized by the scales contained in the arm member moving mechanisms 5 and the slide mechanism 92.

Thereafter, as shown in Fig. 15B, the observation camera 91, while being moved by the arm member moving mechanisms 5 and the slide mechanism 92, picks up images of droplet landing positions 111 in succession to determine actual landing positions from the alignment marks 110A.

Then, deviations between the virtual landing positions and the actual landing positions are stored as correction data for the individual droplet ejecting sections 6, respectively. These deviations are decomposed into components in the directions of arrow A and arrow B.

Since the droplet ejection from the droplet ejecting sections 6 is performed with the arm member 4 kept moving in the arrow A direction, deviations in the arrow A direction can be corrected by adjusting the ejection timing of the droplet ejecting sections 6. Deviations in the arrow B direction are corrected by offset of moving amounts of the slide mechanisms 7. These operations may include detection of non-ejection for each nozzle or detection of landing variations.

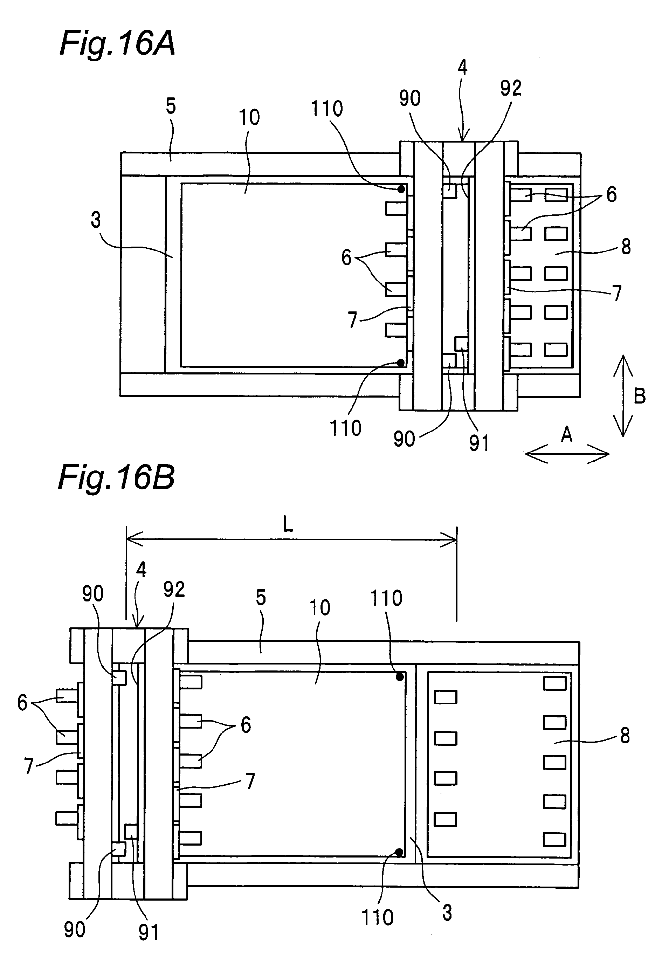

Next, the method of dropping droplets to desired positions referenced by alignment marks on the substrate 10 that has been completely posture-controlled is explained with reference to Figs. 16A and 16B. Fig. 16A shows a state that the arm member 4 has moved rightmost in the drawing sheet in the process of droplet dropping to the substrate 10. Fig. 16B shows a state that the arm member 4 has moved leftmost in the drawing sheet in the process of droplet dropping to the substrate 10. The arm member 4 reciprocates one to plural times over a range of a length L in the arrow A direction.

The plurality of droplet ejecting sections 6 mounted on the arm member 4 are movable in the arrow B direction independently of one another. The arm member 4 is reciprocatively moved in the arrow A direction on the substrate 10.

Before execution of the droplet ejecting operation, the individual droplet ejecting sections 6 are moved to addresses in the arrow B direction, which are desired positions, and stopped there. Then, during the reciprocative movement of the arm member 4 in the arrow A direction, droplets are ejected at a time point when addresses in the arrow A direction and the arrow B direction have become coincident with those of the desired positions. This operation is controlled for the plurality of droplet ejecting sections 6 independently of one another.

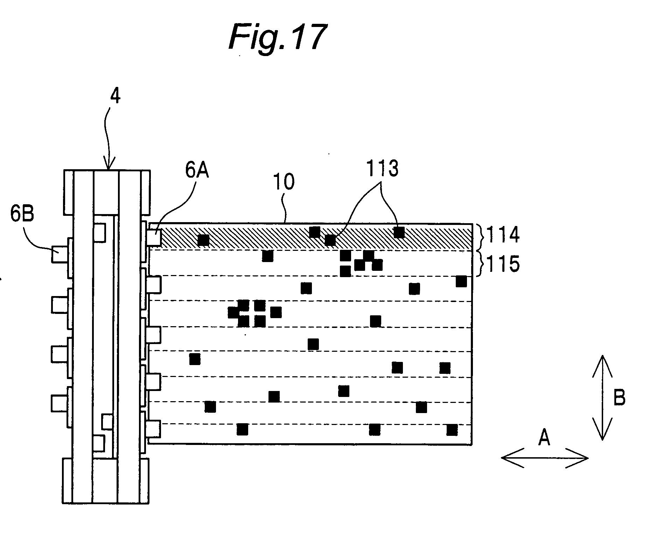

Next, the operation of ejecting droplets to the substrate 10 by the droplet ejecting sections 6 is explained with reference to Fig. 17.

On the arm member 4 are mounted nine droplet ejecting sections 6 that are movable in the arrow B direction independently of one another. Assigned areas on the substrate 10 are set for the droplet ejecting sections 6, respectively.

While a plurality of defect portions 113 are present scatteredly on the substrate 10, the droplet ejecting sections 6 have their respective assigned areas zonally divided along the arrow B direction. A hatched area 114 in the figure is assigned to the first droplet ejecting section 6A. An area 115 is assigned to the second droplet ejecting section 6B. These respective droplet ejecting sections 6 perform droplet ejecting operation for the defect portions 113 present in the their respective assigned areas.

During the repeated reciprocative movement of the arm member 4 in the arrow A direction, the individual droplet ejecting sections 6 are moved in the arrow B direction independently so as to be moved to just above their assigned defect portions 113, respectively, and stopped at places of coincidence of addresses in the arrow B direction, keeping on standby until there comes coincidence of addresses in the arrow A direction by the movement of the arm member 4. Then, at a timing when the desired positions on the substrate 10 come just below, the droplet ejecting sections 6 are driven to eject droplets to the desired positions on the substrate 10.

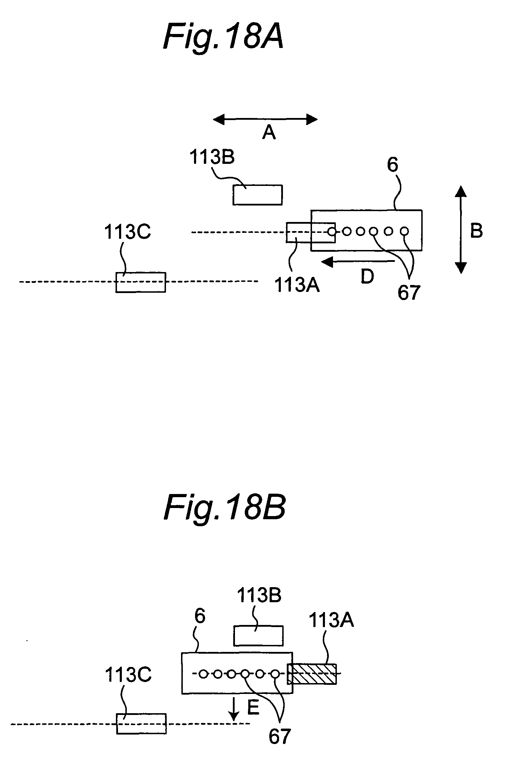

Next, a process that the droplet ejecting sections 6 eject droplets to a plurality of the defect portions 113, which are rectangular-shaped recesses, during the reciprocative movement of the arm member 4 is explained with reference to Figs. 18A to 18D. It is noted here that the term, defect portions 113, refers to portions where, with respect to portions having dust mixed in the manufacturing process, portions having blank dips formed therein, and the like, those failures are corrected into recesses of a certain shape by laser or the like.

On the assumption that all the droplet ejecting sections 6 eject one identical droplet material, a restoration method for defects of one kind of pixel (either one of red, blue or yellow) is described below. In addition, restoration of defect portions of all the colors is enabled by providing three units of this apparatus for the color materials, respectively, to perform successive processing, or by enabling such a droplet ejecting section 6A as shown in Fig. 7B to implement ejection of a plurality of colors.

Figs. 18A to 18D are explanatory views regarding one of the plurality of droplet ejecting sections 6 mounted on the arm member 4 and showing, in time series, the execution of ejecting operation for a plurality of defect portions 113 from one droplet ejecting section 6.

As shown in Fig. 18A, defect portions 113A, 113B, 113C on the substrate are recess portions each having a depth of about 2 µm, their openings each having a roughly 200 µm × 70 µm rectangular shape with its longer sides extending along the moving direction (arrow A direction) of the arm member 4. It is noted that the array direction of the nozzle openings 67 of the droplet ejecting section 6 is parallel to the arrow A direction, but actually inclined by a few degree as shown in Fig. 7A.

First, for ejection of droplets and restoration for the defect portion 113A, the droplet ejecting section 6 is moved at high speed by using the slide mechanism 7, and stopped with the nozzle openings 67 aligned on a center line of the defect portion 113A.

The time of movement of the droplet ejecting section 6 has to include, in addition to the time of actual movement, a settling time that elapses from the stop of the droplet ejecting section 6 until damping of residual vibrations due to the movement of the droplet ejecting section 6 to such a level that droplet ejection of the droplet ejecting section 6 is not adversely affected.

The droplet ejecting section 6, which has preliminarily been moved to above the center line of the defect portion 113A, is moved in an arrow D direction by constant-speed movement of the arm member 4 to eject droplets from the nozzle openings 67 located above the defect portion 113A.

For this operation, a plurality of nozzle openings 67 just above the defect portion 113A may be used, so that the speed of the constant-speed movement of the arm member 4 is raised, compared with the case where one nozzle opening 67 is used, making it possible to improve the processing speed for the substrate as a whole.

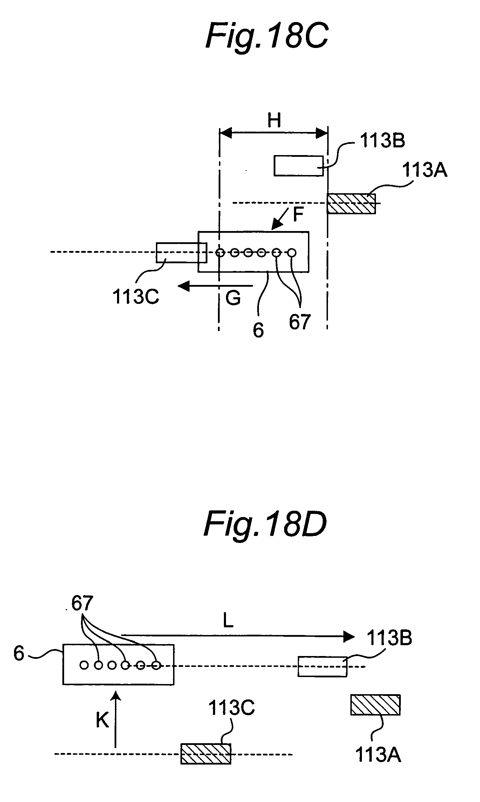

Thereafter, the droplet ejecting section 6, which has ejected droplets onto the defect portion 113A, is moved in an arrow E direction by the slide mechanism 7 to restore another defect portion 113C as shown in Fig. 18B, being stopped at a position where the center line of the defect portion 113C and the array direction of the nozzle openings 67 coincide with each other. During this operation, since the arm member 4 is also moved leftward in the drawing sheet at a constant speed, the droplet ejecting section 6 is moved in an arrow F direction relative to the substrate 10 as shown in Fig. 18C.

Then, by the movement of the arm member 4, the droplet ejecting section 6, while being moved in an arrow G direction, ejects droplets from the nozzle openings 67 located just above the defect portion 113C to restore the defect portion 113C.

After that, the arm member 4 starts to be moved in the opposite direction after the completion of one-direction movement. As shown in Fig. 18D, the droplet ejecting section 6 is moved in an arrow K direction by the slide mechanism 7 to restore yet another defect portion 113B, being stopped with the array direction of the nozzle openings 67 coincident with the center line of the defect portion 113B. Then, by movement of the arm member 4, the droplet ejecting section 6 is moved in an arrow L direction to eject droplets from the nozzle openings 67 located just above the defect portion 113B.

Consequently, by utilizing the reciprocating operation of the arm member 4, the restoration of the three defect portions 113A, 113B, 113C is carried out in an order of the defect portion 113A to the defect portion 113C to the defect portion 113B, hence the best utilization of advantages of this apparatus construction.

That is, as shown in Figs. 18A to 18D, for the ejection to the defect portion 113A with a plurality of nozzle openings 67, the droplet ejecting section 6 cannot be moved until the rightmost nozzle opening 67, as in the drawing sheet, that actually performs the ejection comes away from just above the defect portion 113A. At least in a region corresponding to the end-to-end distance of the nozzle openings 67 to be used, the droplet ejecting section 6 cannot be moved in the up/down direction, as in the drawing sheet, so as to be directed toward restoration of the next defect portion.

That is, the unmanageable region H includes a zonal region corresponding to the end-to-end distance of the in-use nozzle openings 67 from an end of the defect portion immediately after the processing, as well as a region resulting from multiplying the moving speed of the arm member 4 by a sum of the time required for the movement in the arrow E direction and the time required for the settling of residual vibrations after the movement.

As shown in Fig. 18C, since the defect portion 113B is contained in the unmanageable region H for the defect portion 113A, the processing of the defect portion 113B is not performed immediately after the restoration of the defect portion 113A, but the restoration of the defect portion 113C that does not belong to the unmanageable region H is performed.

Then, as the returning movement of the arm member 4 goes, the restoration of the defect portion 113B that does not belong to the unmanageable region H is performed after the restoration of the defect portion 113C.

Although the movement operation as to one droplet ejecting section 6 has been described above, the apparatus has a plurality of droplet ejecting sections 6, which operate independently of one another.

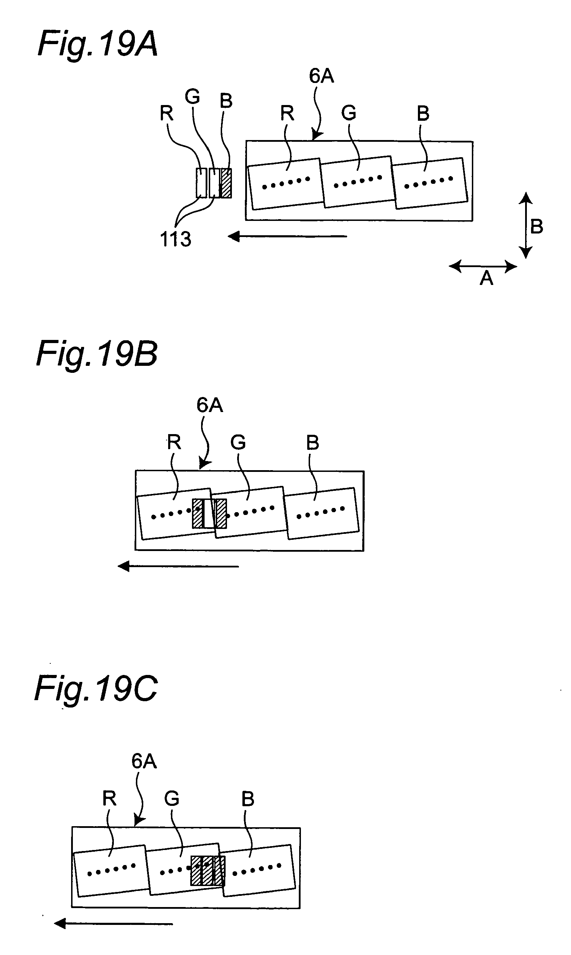

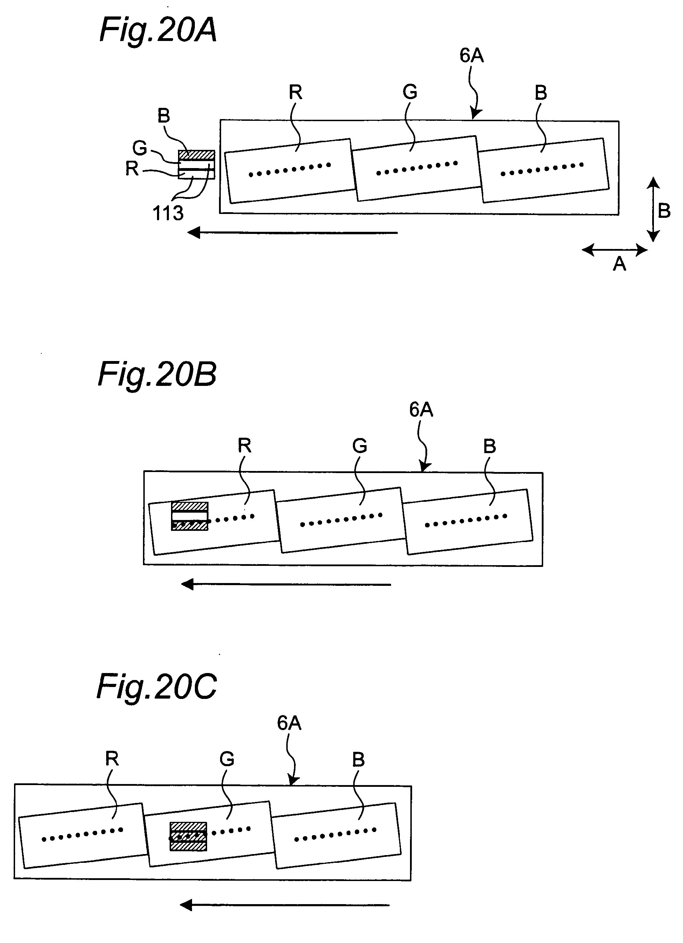

Next, a procedure for restoring pixels of the defect portions 113 by the droplet ejecting section 6A that ejects a plurality of droplet materials shown in Fig. 7B is explained with reference to Figs. 19A to 19C and Figs. 20A to 20C.

First, restoration of a defect portion 113 is described on a case where, as shown in Figs. 19A to 19C, a pixel longitudinal direction of the defect portion 113 is a direction perpendicular to the moving direction of the arm member 4.

As shown in Fig. 19A, in the event of occurrence of pixels showing no desired color due to color mixing of R and G pixels caused by dust or the like during the manufacturing process, the resulting portion is removed by laser in a rectangular shape, so that a recess portion, which is the defect portion 113, is formed. Then, the droplet ejecting section 6A is moved in one way of the arrow A direction.

Thereafter, as shown in Fig. 19B, droplets are dropped to a defect portion 113 of the R pixel by the droplet ejecting section 6A. Further, as shown in Fig. 19C, droplets are dropped to a defect portion 113 of the G pixel by the droplet ejecting section 6A.

Next, restoration of the defect portion 113 is described on a case where, as shown in Figs. 20A to 20C, a pixel longitudinal direction of the defect portion 113 is the moving direction of the arm member 4.

As shown in Fig. 20A, in the event of occurrence of pixels showing no desired color due to color mixing of R and G pixels caused by dust or the like during the manufacturing process, the resulting portion is removed by laser in a rectangular shape, so that a recess portion, which is the defect portion 113, is formed. Then, the droplet ejecting section 6A is moved in one way of the arrow A direction.

Thereafter, as shown in Fig. 20B, droplets are dropped to a defect portion 113 of the R pixel by the droplet ejecting section 6A. Further, as shown in Fig. 20C, droplets are dropped to a defect portion 113 of the G pixel by the droplet ejecting section 6A.

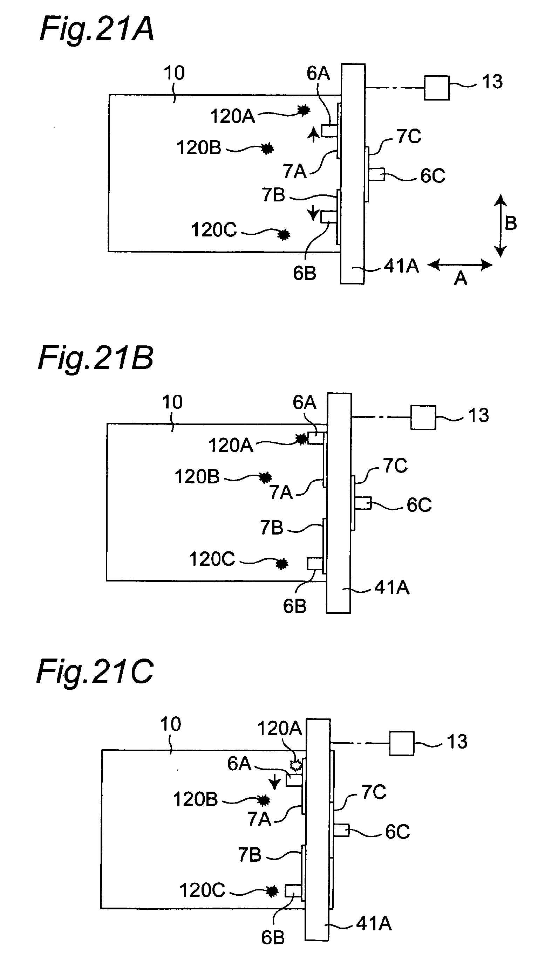

Next, a method for restoring defects of the substrate 10 by the droplet ejecting sections 6 while controlling the movement of the droplet ejecting sections 6 by the control section 13 is explained with reference to Figs. 21A to 21E.

In this case, the droplet applying apparatus includes: one beam member 41A; a first slide mechanism 7A, a second slide mechanism 7B, a first droplet ejecting section 6A and a second droplet ejecting section 6B fitted on one surface of the beam member 41A; and a third slide mechanism 7C and a third droplet ejecting section 6C fitted on another surface of the beam member 41A, in which arrangement a first restoration point 120A, a second restoration point 120B and a third restoration point 120C on the substrate 10 are to be restored. A distance between the first slide mechanism 7A and the second slide mechanism 7B is about 1.0 m.

First, as shown in Fig. 21A, the beam member 41A is moved from a start point to the first restoration point 120A. Simultaneously with this, the first droplet ejecting section 6A is moved to the first restoration point 120A, while the second droplet ejecting section 6B is moved to the third restoration point 120C.

Then, as shown in Fig. 21B, the first and second droplet ejecting sections 6A, 6B reach the first and third restoration points 120A, 120C, respectively before the beam member 41a reaches the first restoration point 120A.

Thereafter, at the time when the beam member 41a reaches the first restoration point 120A, droplets are ejected from the first droplet ejecting section 6A to the first restoration point 120A to do restoration.

Subsequently, as shown in Fig. 21C, the beam member 41a is moved to the third restoration point 120C, while simultaneously the first droplet ejecting section 6A is moved to the second restoration point 120B.

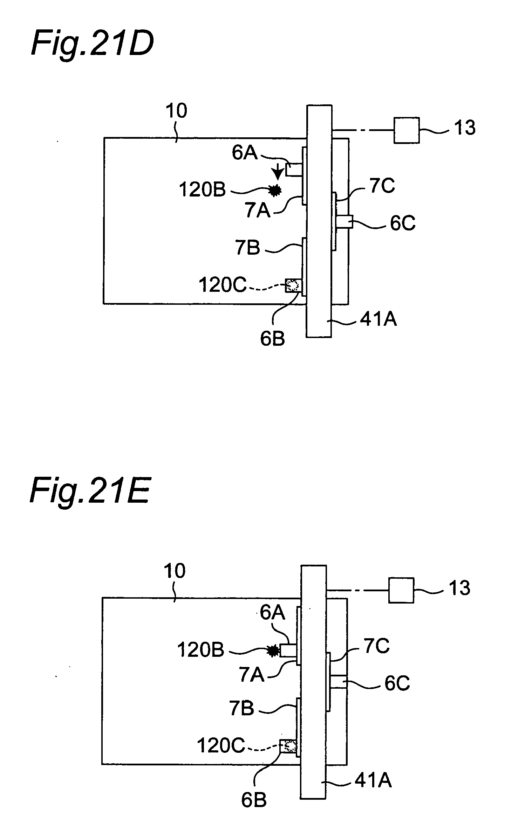

At the time when the beam member 41a reaches the third restoration point 120C, droplets are ejected from the second droplet ejecting section 6B to the third restoration point 120C as shown in Fig. 21D. During this process, the first droplet ejecting section 6A continues to be moved to the second restoration point 120B, then being stopped upon reach to the second restoration point 120B as shown in Fig. 21E.

Finally, the beam member 41a is moved to the second restoration point 120B, where droplets are ejected from the first droplet ejecting section 6A to the second restoration point 120B. Since no standby time arises during the process, the restoration is completed in the shortest time.

That is, while the beam member 41a is moved from the first restoration point 120A to the second restoration point 120B, the first droplet ejecting section 6A is moved toward the second restoration point 120B, being stopped upon reaching the second restoration point 120B. Then, during the period while the first droplet ejecting section 6A is moved from the first restoration point 120A to the second restoration point 120B and stopped there, droplets are ejected from the second droplet ejecting section 6B to the third restoration point 120C.

In this connection, during the ejection operation by the second droplet ejecting section 6B, the control section 13 exerts such control that the first droplet ejecting section 6A being moving is subject to gentler acceleration changes in speed changes.

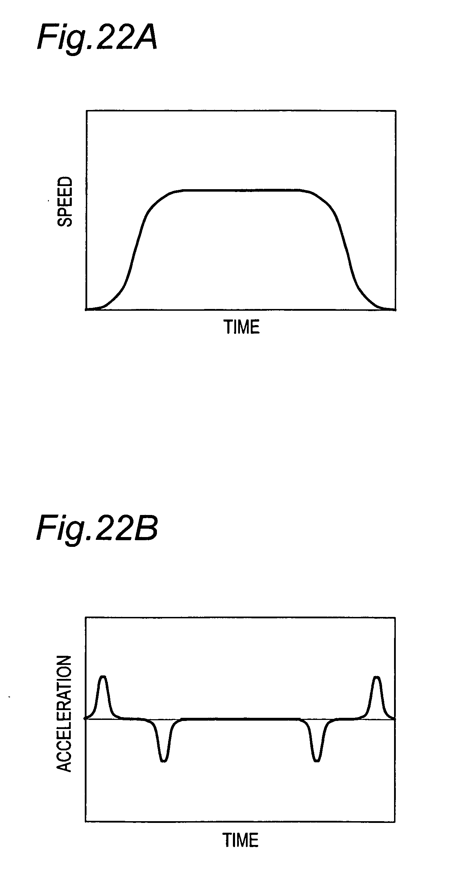

More specifically, speed changes in movement of the first droplet ejecting section 6A are made gentler by the control section 13 as shown in Fig. 22A, so that acceleration changes in the movement of the first droplet ejecting section 6A are made gentler as shown in Fig. 22B.

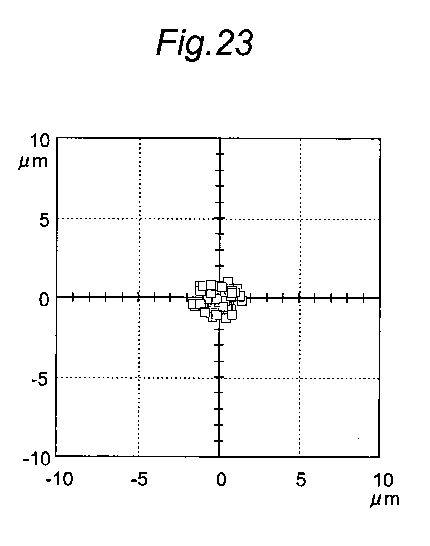

In this case, measurement of droplet landing positions ejected from the second droplet ejecting section 6B shows a result that droplet landing positions fall within a range of about ±2 µm in the X and Y directions on the substrate 10 as shown in Fig. 23. Executing the restoration in this state resulted in a successful restoration for every defect portion on the substrate 10.

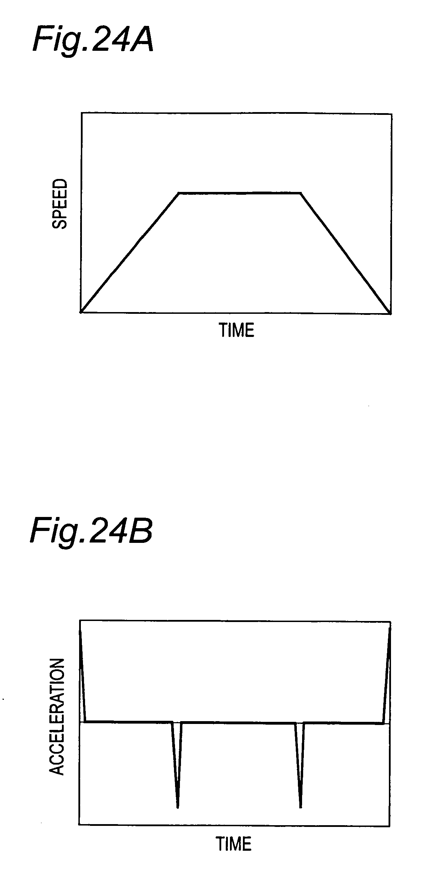

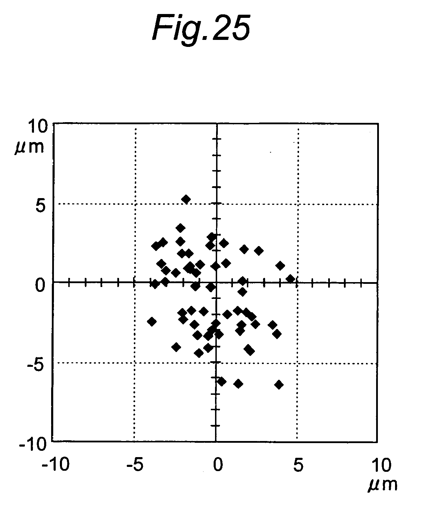

In contrast to this, as a first comparative example, speed changes in movement of the first droplet ejecting section 6A are made sharper as shown in Fig. 24A, so that acceleration changes in the movement of the first droplet ejecting section 6A are made sharper as shown in Fig. 24B. In this case, measurement of droplet landing positions ejected from the second droplet ejecting section 6B shows a result that droplet landing positions sparsely extend over a range of about ±5 µm in the X and Y directions on the substrate 10 as shown in Fig. 25. Executing the restoration of the substrate 10 in this state resulted in the occurrence that some of the droplets stretched to verges of openings of the defect portions on the substrate 10, hence difficulty in achieving a successful restoration.

Meanwhile, as a second comparative example, movement of the first droplet ejecting section 6A is not performed while droplets are being ejected from the second droplet ejecting section 6B, in which case the restoration of the substrate 10 takes longer time.

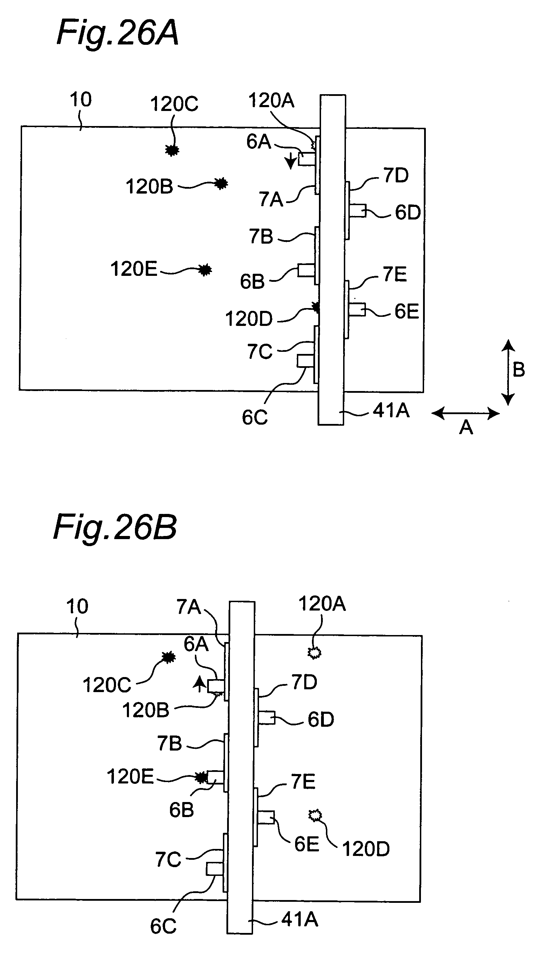

Next, another method for restoring defects of the substrate 10 by the droplet ejecting sections 6 while movement of the droplet ejecting sections 6 is controlled by the control section 13 is explained with reference to Figs. 26A and 26B.

In this case, the droplet applying apparatus includes: one beam member 41A; first to third slide mechanisms 7A - 7C and first to third droplet ejecting sections 6A - 6C fitted on one surface of the beam member 41A; and fourth and fifth slide mechanisms 7D, 7E and fourth and fifth droplet ejecting sections 6D, 6E fitted on another surface of the beam member 41a, in which arrangement first to fifth restoration points 120A - 120E present on the substrate 10 are to be restored.

The beam member 41A has a length of about 5 m, a distance between the first slide mechanism 7A and the second slide mechanism 7B is about 1.4 m, and a distance between the first slide mechanism 7A and the fifth slide mechanism 7E is about 2.1 m.

First, as shown in Fig. 26A, while the first droplet ejecting section 6A is being moved from the first restoration point 120A to the second restoration point 120B, droplets are ejected from the fifth droplet ejecting section 6E to the fourth restoration point 120D.

Further, as shown in Fig. 26B, while the first droplet ejecting section 6A is being moved from the second restoration point 120B to the third restoration point 120C, droplets are ejected from the second droplet ejecting section 6B to the fifth restoration point 120E.

In this case, with sharp speed changes of the first droplet ejecting section 6A as shown in Fig. 24A, landing positions of the droplets ejected from the second droplet ejecting section 6B extended widely and sparsely as shown in Fig. 25, hence difficulty in achieving a successful restoration.

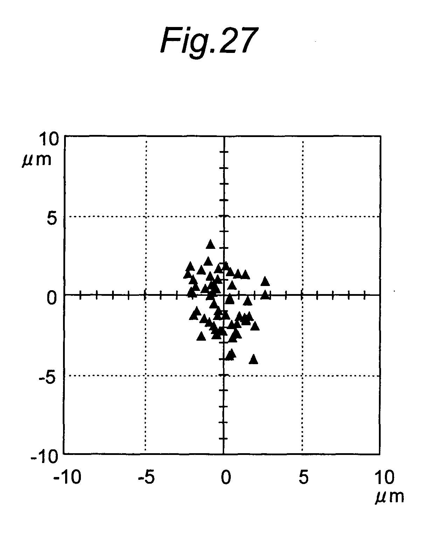

Meanwhile, with sharp speed changes of the droplet ejecting section 6A as shown in Fig. 24A, it was shown that landing positions of the droplets ejected from the fifth droplet ejecting section 6E fall within a range of ±3 µm in the X and Y directions on the substrate 10 as shown in Fig. 27.

That is, it has been proved that landing positions fall within a range narrower than ±3 µm if the distance between the slide mechanism 7 and the droplet ejecting section 6 is beyond 2 m. Executing the restoration of the substrate 10 in this state resulted in a successful restoration at every defect portion on the substrate 10.

On the other hand, with the distance between the slide mechanism 7 and the droplet ejecting section 6 equal to 2 m or less, performing such control as to effectuate gentle acceleration changes in speed changes of the droplet ejecting section 6 resulted in a successful restoration for every time of restoration.

Because of the 5 m length of the beam member 41A, performing such control as to effectuate gentle acceleration changes in speed changes of the droplet ejecting section 6 under the condition of the distance between the slide mechanism 7 and the droplet ejecting section 6 being about 40% or less the length of the gantry resulted in a successful restoration for every time of restoration.

Then, with sharp acceleration changes in speed changes of the droplet ejecting section 6, the time required for the movement of the droplet ejecting section 6 is shortened, as compared with the case where the control is exerted to effectuate gentle acceleration changes in speed changes of the droplet ejecting section 6. Accordingly, even higher restoration becomes achievable, as compared with the case where the control is exerted to effectuate gentle acceleration changes in speed changes of every droplet ejecting section 6.

Furthermore, similar restoration process was carried out with the apparatus constructed as shown in Fig. 1A. With the beam member 41, 42 having a length of about 5m, such control was exerted as to effectuate gentle acceleration changes in speed changes of the droplet ejecting section 6 for 0.6 m or less distances between the slide mechanism 7 and the droplet ejecting section 6, i.e., 12% or less ratios of the distance between the slide mechanism 7 and the droplet ejecting section 6 to the length of the beam member 41, 42, and as to cause sharp speed changes of the droplet ejecting section 6 for more than 0.6 m distances between the slide mechanism 7 and the droplet ejecting section 6, i.e., more than 12% ratios of the distance between the slide mechanism 7 and the droplet ejecting section 6 to the length of the beam member 41, 42. As a result of this, in the restoration of the substrate 10, a successful restoration was able to be achieved for every defect portion on the substrate 10.

According to the droplet applying apparatus having the above-described construction, since the droplet applying apparatus includes the beam members 41, 42 movable relative to the base 11 and a plurality of the droplet ejecting sections 6 movably fitted to the beam members 41, 42, it becomes possible, in the application of droplets to specified portions (e.g., coloring failure portions) of the substrate 10 by the droplet ejecting sections 6, to execute the droplet ejection by moving the beam members 41, 42 or the droplet ejecting sections 6, so that the droplets can be applied to the specified portions of the substrate 10 with high efficiency.

Also, the quantity of the droplet ejecting sections 6 can be reduced to a necessary minimum, so that the quantity of non-operating droplet ejecting sections 6 can be cut down. Accordingly, clogging of the droplet ejecting sections 6 by droplets can be prevented, the liquid quantity of waste fluid due to the maintenance operation of the droplet ejecting sections 6 can be reduced, and moreover the ejection quantity of all the droplet ejecting sections 6 can be uniformized.

The droplet applying apparatus also includes the control section 13 for performing such control that while the one droplet ejecting section 6 is performing ejection, acceleration changes in speed changes of the other droplet ejecting sections 6 that are being moved are made gentle. Therefore, even if the other droplet ejecting sections 6 are moved during the ejection operation of the one droplet ejecting section 6, the acceleration changes in speed changes of the other droplet ejecting sections 6 can be made gentle, so that landing position precision of droplets ejected from the one droplet ejecting section 6 is not deteriorated. Also, since the ejection of droplets from the one droplet ejecting section 6 and the movement of the other droplet ejecting sections 6 do not affect each other, the ejection of droplets from the one droplet ejecting section 6 and the movement of the other droplet ejecting sections 6 can be carried out simultaneously, so that the time required for application for the restoration of the substrate 10 or the like can be shortened.

Also, the droplet applying apparatus include the slide mechanisms 7 which are provided in correspondence to the plurality of droplet ejecting sections 6, respectively, and which allow the droplet ejecting sections 6 to be movably fitted to the beam members 41, 42. Accordingly, there is no possibility of interference due to movement among the droplet ejecting sections 6, so that the control section 13 can easily control the droplet ejecting sections 6.

Since the slide mechanisms 7 are air-slide type slide mechanisms, movement of the plurality of droplet ejecting sections 6 can be smoothly performed by the slide mechanisms 7. Thus, acceleration changes in speed changes of the other droplet ejecting sections 6 can be made gentle by the control section 13 with reliability.

The distance between the slide mechanism 7 to which the one droplet ejecting section 6 is fitted and the other droplet ejecting sections 6 is not more than 2 m, particularly desirably not more than 0.6 m. Therefore, it becomes possible to, during the ejection operation of the one droplet ejecting section 6, perform the movement of the other droplet ejecting sections 6 located within a range of 2 m or less, particularly desirably 0.6 m or less, without deteriorating the landing position precision from the one droplet ejecting section 6.

Meanwhile, during the ejection operation of the one droplet ejecting section 6, acceleration changes in speed changes of other droplet ejecting sections 6 located 2 m, particularly desirably 0.6 m or more, far from the one droplet ejecting section 6 can be made sharp. Thus, the other droplet ejecting sections 6 can be moved at further higher speed, so that the time required for application for the restoration of the substrate 10 or the like can be shortened.

Also, since the distance between the slide mechanism 7 to which the one droplet ejecting section 6 is fitted and other droplet ejecting sections 6 is 40% or less, particularly desirably 12% or less, of the one-direction length of the beam member 41, 42, the other droplet ejecting sections 6 located within a range of 40% or less, particularly desirably 12% or less, of distances from the one droplet ejecting section 6 can be moved without deteriorating the landing position precision from the one droplet ejecting section 6 during the ejection operation of the one droplet ejecting section 6.

Meanwhile, during the ejection operation of the one droplet ejecting section 6, acceleration changes in speed changes of other droplet ejecting sections 6 located 40%, particularly desirably 12% or more, of distances from the one droplet ejecting section 6 can be made sharp. Thus, the other droplet ejecting sections 6 can be moved at further higher speed, so that the time required for application for the restoration of the substrate 10 or the like can be shortened.

The present invention is not limited to the above-described embodiment. For example, it is also allowable for the control section 13 to perform such control as to effectuate gentle acceleration changes in speed changes of all the droplet ejecting sections 6. Further, the slide mechanisms 7 may be rolling-guided or other contact type slide mechanisms instead of air-slide type slide mechanisms.

The beam member may be provided only one in quantity, and the droplet ejecting sections 6 may be fitted to both side faces of the beam member. The number of beam members may be freely increased or decreased.

The image pickup devices may be those other than the image pickup members 90 or the observation camera 91. The image pickup members 90 may be provided by one camera unit in which a high-magnification mode and a low-magnification mode are switched over by zooming. Also, the image pickup members 90 may be so designed that observations by high and low magnifying powers can be implemented at the same time by means of optical path division. More specifically, light from the substrate 10 may be split so as to be led to two CCDs having different pixel counts, respectively.

The moving direction of the droplet ejecting sections 6 and the moving direction of the arm member 4 may be other than perpendicular to each other, as viewed in a plane. It is also allowed that the arm member 4 is stationary while the mounting stage 3 is movable.

The droplet ejecting sections 6 may be so designed as to eject and apply droplets to the entire surface of the substrate 10. Also, the number of the droplet ejecting sections 6 may be freely increased or decreased.

The moving direction of the droplet ejecting sections 6 may be different from the arrow B direction. Also, the moving direction of the droplet ejecting sections 6 may be not a single direction but, for example, two directions.

The plurality of droplet ejecting sections 6 fitted to the beam members 41, 42 have only the need that at least one of the droplet ejecting sections 6 is movable while the other droplet ejecting sections 6 may be fixed to the beam members 41, 42. For instance, in cases where there are density differences among points to which droplets should be ejected in the substrate 10 (cases where higher-density points and lower-density points are originally included as a placement of ink receiving points (e.g., coloring points) in the substrate 10), fixed ones of the droplet ejecting sections 6 are used for higher-density points while movable ones of the droplet ejecting sections 6 are used for lower-density points. In such a case, during the movement of the movable droplet ejecting sections 6 proximate to one fixed droplet ejecting section 6, it is effective to perform such control as to effectuate gentle acceleration changes in speed changes of the movable droplet ejecting sections 6 with a view to improving the landing position precision of droplets from the fixed droplet ejecting section 6.

It is also allowable to provide a slide mechanism common to the droplet ejecting sections 6. In this case, although position control of the droplet ejecting sections 6 becomes difficult to manage, optimum position control for the droplet ejecting sections 6 becomes achievable in comparison to cases where slide mechanisms are provided individually. For instance, with correction points present in a half-length part of the beam members 41, 42, the common slide mechanism allows the droplet ejecting sections 6 to be concentrated to those points.

The droplet applying apparatus of the invention is applied to apparatuses that perform restoration of defect portions of a color filter substrate hereinabove. However, the droplet applying apparatus may also be applied to other apparatuses that perform ejection to desired points scattered on the substrate. For example, the invention apparatus is also applicable to apparatuses that eject electrically conductive ink onto the substrate to draw interconnect patterns, apparatuses that eject materials for formation of organic EL (Electronic Luminescence) on the substrate to manufacture organic EL displays, apparatuses that restore defect portions of organic EL displays, apparatuses that print images on large-size signboards or the like, apparatuses that restore images, or other manufacturing apparatuses to which the ink jet technology is applied.

## Claims

1. A droplet applying apparatus comprising:
a base having a mounting surface on which a substrate is to be mounted;
at least one beam member which confronts the mounting surface and extends in one direction of the mounting surface and which is fitted to the base so as to be movable relative to the base in another direction of the mounting surface;
a plurality of droplet ejecting sections which are fitted to the beam member so that at least one of the droplet ejecting sections is movable and which eject and apply droplets to the substrate; and
a control section for, during ejection operation of one of the droplet ejecting sections, performing such control as to effectuate gentle acceleration changes in speed changes of at least ones of the movable other droplet ejecting sections proximate to the one droplet ejecting section while the movable other droplet ejecting sections are being moved.

2. The droplet applying apparatus as claimed in Claim 1, wherein
the plurality of droplet ejecting sections are fitted to the beam member so as to be movable independently, and
the droplet applying apparatus further includes slide mechanisms which are provided in correspondence to the plurality of droplet ejecting sections, respectively, and to which the droplet ejecting sections are fitted so as to be movable relative to the beam member.

3. The droplet applying apparatus as claimed in Claim 2, wherein
the slide mechanisms are air-slide type slide mechanisms.

4. The droplet applying apparatus as claimed in Claim 2, wherein
a distance between the slide mechanism to which the one droplet ejecting section is fitted and the other droplet ejecting sections is not more than 2 m.

5. The droplet applying apparatus as claimed in Claim 2, wherein
a distance between the slide mechanism to which the one droplet ejecting section is fitted and the other droplet ejecting sections is not more than 40% or less a length of the beam member measuring in the one direction.
